# EUROPEAN PATENT APPLICATION

(11) **EP 4 832 553 A1**
(43) Date of publication of application: **28.10.2026**
(21) Application number: 25738569.0
(22) Date of filing: 10.01.2025
(51) Int. Cl.: H04W 24/02

(54) **NEIGHBOR CELL MEASUREMENT METHOD, ELECTRONIC DEVICE AND STORAGE MEDIUM**

(30) Priority: 12.01.2024 CN 202410049580
(71) Applicant: Honor Device Co., Ltd., Shenzhen, Guangdong 518040 (CN)
(72) Inventor: WEI, Zhenrong, Shenzhen, Guangdong 518040 (CN)
(74) Representative: Gill Jennings & Every LLP
(86) International application number: PCT/CN2025/071785
(87) International publication number: WO 2025/149042

(57) **Abstract**

This application provides a neighboring cell measurement method, an electronic device, and a storage medium, and relates to the field of terminal technologies. When a serving cell on which the electronic device camps is of good quality, neighboring cell measurement may also be performed, to obtain sufficient neighboring cell information, so that the electronic device can perform precise positioning based on the sufficient neighboring cell information. The method includes: receiving, by an electronic device, neighboring cell measurement configuration information from a network-side device, where the neighboring cell measurement configuration information includes a neighboring cell measurement threshold; and performing, by the electronic device, neighboring cell measurement when a signal quality parameter of a target serving cell is greater than the neighboring cell measurement threshold in the neighboring cell measurement configuration information, to obtain a neighboring cell measurement result.

## Description

This application claims priority to Chinese Patent Application No. 202410049580.7, filed with the China National Intellectual Property Administration on January 12, 2024 and entitled "NEIGHBORING CELL MEASUREMENT METHOD, ELECTRONIC DEVICE, AND STORAGE MEDIUM", which is incorporated herein by reference in its entirety.

### TECHNICAL FIELD

This application relates to the field of terminal technologies, and in particular, to a neighboring cell measurement method, an electronic device, and a storage medium.

### BACKGROUND

In a current communication technology, when a user terminal (user equipment, UE) camps on any serving cell (for example, a long term evolution (long term evolution, LTE) cell or a new radio/new radio (new radio, NR) cell), the user terminal needs to be positioned for various possible requirements or objectives of the user terminal (for example, a function applied to the user terminal needs positioning information). However, for better positioning, the terminal further needs to perform measurement on a neighboring cell (for example, an intra-frequency neighboring cell, an inter-frequency neighboring cell, and an inter-system neighboring cell) of the server cell, to obtain cell information (for example, a neighboring cell ID and a signal quality parameter, or a physical cell ID and cell signal strength) of the neighboring cell, thereby assisting in completing positioning. For the objective of energy saving of the user terminal, a network-side device configures, for the user terminal in an idle state or a connected state, a neighboring cell measurement threshold (including respective measurement thresholds of the intra-frequency neighboring cell, the inter-frequency neighboring cell, and the inter-system neighboring cell) of the neighboring cell. When a value of signal quality of the serving cell on which the user terminal camps is less than the neighboring cell measurement threshold of the neighboring cell, the corresponding neighboring cell is measured. When the value of the signal quality parameter of the serving cell on which the user terminal camps is greater than the neighboring cell measurement threshold of the neighboring cell, the corresponding neighboring cell is not measured.

In this way, when signal quality of the serving cell on which the user terminal currently camps is good (the value of the signal quality parameter is greater than the neighboring cell measurement threshold), the user terminal possibly cannot obtain sufficient cell information of the neighboring cell, resulting in low precision of a final positioning result.

### SUMMARY

Embodiments of this application provide a neighboring cell measurement method, an electronic device, and a storage medium. When a serving cell on which the electronic device camps is of good quality, neighboring cell measurement may also be performed, to obtain sufficient neighboring cell information, so that the electronic device can perform precise positioning based on the sufficient neighboring cell information.

To achieve the foregoing objective, the following technical solutions are used in embodiments of this application:

According to a first aspect, an embodiment of this application provides a neighboring cell measurement method, applied to an electronic device. The method includes: receiving, by the electronic device, neighboring cell measurement configuration information from a network-side device, where the neighboring cell measurement configuration information includes a neighboring cell measurement threshold; and performing, by the electronic device, neighboring cell measurement when a signal quality parameter of a target serving cell on which the electronic device currently camps is greater than the neighboring cell measurement threshold in the neighboring cell measurement configuration information, to obtain a neighboring cell measurement result.

Based on the foregoing technical solution, when signal quality of the serving cell on which the electronic device camps is good, the electronic device may also perform complete neighboring cell measurement, to obtain sufficient neighboring cell information. Then, the electronic device may also complete positioning based on the sufficient neighboring cell information, so that a positioning requirement of the electronic device is met. In this way, a function having the positioning requirement in the electronic device may better provide a service to a user, thereby improving use experience of the user.

In a possible design manner of the first aspect, the performing, by the electronic device, neighboring cell measurement when a signal quality parameter of a target serving cell is greater than the neighboring cell measurement threshold in the neighboring cell measurement configuration information, to obtain a neighboring cell measurement result includes: increasing, by the electronic device, the neighboring cell measurement threshold in the neighboring cell measurement configuration information when the signal quality parameter of the target serving cell is greater than the neighboring cell measurement threshold in the neighboring cell measurement configuration information, to cause an increased neighboring cell measurement threshold to be greater than the signal quality parameter of the target serving cell; or ignoring the neighboring cell measurement threshold in the neighboring cell measurement configuration information; and performing, by the electronic device, neighboring cell measurement, to obtain the neighboring cell measurement result.

Based on the foregoing design manner, when the signal quality of the serving cell currently camped on is good, the electronic device may improve the neighboring cell measurement threshold, so that the electronic device can smoothly perform neighboring cell measurement according to existing neighboring cell measurement logic. In this way, when the signal quality is good, the electronic device may also obtain sufficient neighboring cell information. Then, the electronic device may also complete positioning based on the sufficient neighboring cell information, so that the positioning requirement of the electronic device is met. In this way, the function having the positioning requirement in the electronic device may better provide the service to the user, thereby improving the use experience of the user.

In a possible design manner of the first aspect, the receiving, by the electronic device, neighboring cell measurement configuration information from a network-side device includes: receiving, by the electronic device, a reconfiguration message from the network-side device when the electronic device is in a connected state, where the reconfiguration information carries neighboring cell measurement configuration information; or receiving, by the electronic device, a broadcast message from the network-side device when the electronic device is in an idle state, where the broadcast message carries the neighboring cell measurement configuration information.

Based on the foregoing design manner, the electronic device may obtain, in both the idle state and the connected state, the neighboring cell measurement configuration information as a reference for performing neighboring cell measurement.

In a possible design manner of the first aspect, the neighboring cell measurement configuration information further includes at least one first frequency and at least one second frequency; the first frequency is different from a target frequency of the target serving cell on which the electronic device currently camps, and a communication standard to which the first frequency belongs is the same as a communication standard to which the target frequency band belongs; the second frequency is different from the target frequency of the target serving cell on which the electronic device currently camps, and a communication standard to which the second frequency belongs is different from the communication standard to which the target frequency band belongs; and the performing, by the electronic device, neighboring cell measurement, to obtain a neighboring cell measurement result includes: performing, by the electronic device, neighboring cell measurement on the target frequency, the first frequency, and the second frequency, to obtain the neighboring cell measurement result.

Based on the foregoing design manner, when performing neighboring cell measurement, the electronic device may obtain neighboring cell information of all measurable intra-frequency neighboring cells, inter-frequency neighboring cells, and inter-system neighboring cells of the target serving cell on which the electronic device currently camps. In this way, the electronic device may obtain sufficient neighboring cell information. Then, the electronic device may also complete positioning based on the sufficient neighboring cell information, so that the positioning requirement of the electronic device is met. In this way, the function having the positioning requirement in the electronic device may better provide the service to the user, thereby improving the use experience of the user.

In a possible design manner of the first aspect, when the electronic device is in the connected state, the neighboring cell measurement threshold in the neighboring cell measurement configuration information includes a first measurement threshold; and the increasing, by the electronic device, the neighboring cell measurement threshold when the signal quality parameter of the target serving cell is greater than the neighboring cell measurement threshold, to cause an increased neighboring cell measurement threshold to be greater than the signal quality parameter of the target serving cell includes: increasing, by the electronic device, the first measurement threshold when the signal quality parameter of the target serving cell is greater than the first measurement threshold, to cause an increased first measurement threshold to be greater than the signal quality parameter of the target serving cell.

Based on the foregoing design manner, when the electronic device is in the connected state and the signal instruction of the target serving cell currently camped on is good, the electronic device may improve the first measurement threshold, so that the electronic device can smoothly perform neighboring cell measurement according to the existing neighboring cell measurement logic. In this way, when the signal quality is good, the electronic device may also obtain sufficient neighboring cell information. Then, the electronic device may also complete positioning based on the sufficient neighboring cell information, so that the positioning requirement of the electronic device is met. In this way, the function having the positioning requirement in the electronic device may better provide the service to the user, thereby improving the use experience of the user.

In a possible design manner of the first aspect, when the electronic device is in the idle state, the neighboring cell measurement threshold in the neighboring cell measurement configuration information includes a second measurement threshold and a third measurement threshold; the second measurement threshold is a measurement threshold for performing neighboring cell measurement on the target frequency, and the third measurement threshold is a measurement threshold for performing neighboring cell measurement on the first frequency and the second frequency; and the increasing, by the electronic device, the neighboring cell measurement threshold when the signal quality parameter of the target serving cell is greater than the neighboring cell measurement threshold, to cause an increased neighboring cell measurement threshold to be greater than the signal quality parameter of the target serving cell includes: increasing, by the electronic device, both the second measurement threshold and the third measurement threshold when both the second measurement threshold and the third measurement threshold are less than the signal quality of the target serving cell, to cause both an increased second measurement threshold and an increased third measurement threshold to be greater than the signal quality parameter of the target serving cell.

Based on the foregoing design manner, when the electronic device is in the idle state and the signal instruction of the target serving cell currently camped on is good, the electronic device may improve the second measurement threshold and the third measurement threshold, so that the electronic device can smoothly perform neighboring cell measurement according to the existing neighboring cell measurement logic. In this way, when the signal quality is good, the electronic device may also obtain sufficient neighboring cell information. Then, the electronic device may also complete positioning based on the sufficient neighboring cell information, so that the positioning requirement of the electronic device is met. In this way, the function having the positioning requirement in the electronic device may better provide the service to the user, thereby improving the use experience of the user.

In a possible design manner of the first aspect, the method further includes: increasing, by the electronic device, a first target measurement threshold when the signal quality parameter of the target serving cell is greater than the neighboring cell measurement threshold, to cause an increased first target measurement threshold to be greater than the signal quality parameter of the target serving cell, where the first target measurement threshold is either the second measurement threshold or the third measurement threshold; performing, by the electronic device, neighboring cell measurement on a frequency corresponding to the first target measurement threshold, to obtain a first neighboring cell measurement result, where if the first target measurement threshold is the second measurement threshold, the frequency corresponding to the first target measurement threshold includes the target frequency; and if the first target measurement threshold is the third measurement threshold, the frequency corresponding to the first target measurement threshold includes the first frequency and the second frequency; and determining, by the electronic device, the first neighboring cell measurement result as the neighboring cell measurement result if a quantity of pieces of neighboring cell information in the first neighboring cell measurement result is greater than or equal to a first preset quantity.

Based on the foregoing design manner, when the electronic device is in the idle state and the signal instruction of the target serving cell currently camped on is good, when the electronic device can obtain sufficient neighboring cell information by performing neighboring cell measurement on only some frequencies, the electronic device may perform neighboring cell measurement on only the some frequencies. This reduces time consumption and power consumption of entire neighboring cell measurement while ensuring subsequent positioning precision, thereby avoiding a problem that a mobile terminal cannot be normally used because a neighboring cell measurement user is excessively long.

In a possible design manner of the first aspect, after the performing, by the electronic device, neighboring cell measurement on a frequency corresponding to the first target measurement threshold, the method further includes: increasing, by the electronic device, a second target measurement threshold if the quantity of pieces of neighboring cell information obtained by performing neighboring cell measurement in the first neighboring cell measurement result is less than the first preset quantity, to cause an increased second target measurement threshold to be greater than the signal quality parameter of the target serving cell, where the second target measurement threshold is the other one of the second measurement threshold and the third measurement threshold that is other than the first target measurement threshold; and performing, by the electronic device, neighboring cell measurement on a frequency corresponding to the second target measurement threshold, to obtain a second neighboring cell measurement result, and adding the second neighboring cell measurement result to the first neighboring cell measurement result, to obtain the neighboring cell measurement result, where if the second target measurement threshold is the third measurement threshold, the frequency corresponding to the second target measurement threshold includes the first frequency and the second frequency; and if the second target measurement threshold is the second measurement threshold, the frequency corresponding to the second target measurement threshold includes the target frequency.

Based on the foregoing design manner, when the electronic device is in the idle state and the signal instruction of the target serving cell currently camped on is good, when the electronic device cannot obtain sufficient neighboring cell information by performing neighboring cell measurement on only some frequencies, the electronic device may perform neighboring cell measurement on all frequencies, to ensure that the sufficient neighboring cell information is obtained, so that the mobile terminal can subsequently perform complete and sufficiently precise positioning, thereby improving the use experience of the user.

In a possible design manner of the first aspect, the first target measurement threshold is the second measurement threshold.

For intra-frequency neighboring cell measurement, only a signal on a current channel needs to be measured and evaluated, and for inter-frequency neighboring cell measurement, handover and measurement need to be performed on channels of different frequencies. Therefore, during neighboring cell measurement, a measurement speed for an intra-frequency neighboring cell is generally higher than a measurement speed for an inter-frequency neighboring cell. Therefore, based on the foregoing design manner, the electronic device may preferentially perform measurement on an intra-frequency neighboring cell corresponding to the target frequency, to obtain the first preset quantity of pieces of neighboring cell information more quickly.

In a possible design manner of the first aspect, after the receiving, by the electronic device, neighboring cell measurement configuration information from a network-side device, the method further includes: performing, by the electronic device, neighboring cell measurement on a frequency corresponding to the third target measurement threshold when the signal quality parameter of the target serving cell is between the second measurement threshold and the third measurement threshold, to obtain a third neighboring cell measurement result, where the third target measurement threshold is one of the second measurement threshold and the third measurement threshold that is greater than the signal quality parameter of the target serving cell; if the third target measurement threshold is the second measurement threshold, the frequency corresponding to the third target measurement threshold includes the target frequency; and if the third target measurement threshold is the third measurement threshold, the frequency corresponding to the third target measurement threshold includes the first frequency and the second frequency; and determining, by the electronic device, the third neighboring cell measurement result as the neighboring cell measurement result if a quantity of pieces of neighboring cell information in the third neighboring cell measurement result is greater than or equal to a first preset quantity.

Based on the foregoing design manner, when the electronic device is in the idle state and the signal instruction parameter of the target serving cell currently camped on is between the second measurement threshold and the third measurement threshold, when the electronic device can obtain sufficient neighboring cell information by performing neighboring cell measurement on only the frequency that corresponds to the third target measurement threshold and that may be for measurement according to the existing logic, the electronic device may perform neighboring cell measurement on only the frequency. This reduces time consumption and power consumption of entire neighboring cell measurement while ensuring subsequent positioning precision, thereby avoiding a problem that a mobile terminal cannot be normally used because a neighboring cell measurement user is excessively long.

Further, based on the foregoing technical solution, when the electronic device is in the idle state and the signal instruction of the cell currently camped on is good, the electronic device may obtain the sufficient neighboring cell information by using a proper forced measurement means, to meet a positioning requirement of the mobile terminal.

In a possible design manner of the first aspect, after the performing, by the electronic device, neighboring cell measurement on a frequency corresponding to the third target measurement threshold, the method further includes: increasing, by the electronic device, a fourth target measurement threshold if the quantity of pieces of neighboring cell information in the third neighboring cell measurement result is less than the first preset quantity, to cause an increased fourth target measurement threshold to be greater than the signal quality parameter of the target serving cell, where the fourth target measurement threshold is the other one of the second measurement threshold and the third measurement threshold that is other than the third target measurement threshold; and performing, by the electronic device, neighboring cell measurement on a frequency corresponding to the fourth target measurement threshold, to obtain a fourth neighboring cell measurement result, and adding the fourth neighboring cell measurement result to the third neighboring cell measurement result, to obtain the neighboring cell measurement result, where if the fourth target measurement threshold is the third measurement threshold, the frequency corresponding to the fourth target measurement threshold includes the first frequency and the second frequency; and if the fourth target measurement threshold is the third measurement threshold, the frequency corresponding to the fourth target measurement threshold includes the target frequency.

Based on the foregoing design manner, when the electronic device is in the idle state and the signal instruction parameter of the target serving cell currently camped on is between the second measurement threshold and the third measurement threshold, when the electronic device cannot obtain sufficient neighboring cell information by performing neighboring cell measurement on only the frequency corresponding to the third target measurement threshold, the electronic device may further perform forced neighboring cell measurement on the frequency that corresponds to the fourth target measurement threshold and that cannot be for neighboring cell measurement according to the existing logic, to ensure that the sufficient neighboring cell information is obtained, so that the mobile terminal can subsequently perform complete and sufficiently precise positioning, thereby improving the use experience of the user.

Further, based on the foregoing technical solution, when the electronic device is in the idle state and the signal instruction parameter of the target serving cell currently camped on is between the second measurement threshold and the third measurement threshold, the electronic device may obtain the sufficient neighboring cell information by using a proper measurement means, to meet the positioning requirement of the mobile terminal.

In a possible design manner of the first aspect, the performing, by the electronic device, neighboring cell measurement, to obtain a neighboring cell measurement result includes: performing, by the electronic device, neighboring cell measurement on the target frequency, the first frequency, and the second frequency in first preset duration; and stopping, by the electronic device, a neighboring cell measurement action when the first preset duration ends, and determining, as the neighboring cell measurement result, neighboring cell information of a neighboring cell obtained by performing neighboring cell measurement on the target frequency, the first frequency, and the second frequency.

Based on the foregoing design manner, the electronic device may limit duration that needs to be consumed for neighboring cell measurement, thereby avoiding a problem that a service of the electronic device cannot be normally used because neighboring cell measurement duration is excessively long.

In a possible design manner of the first aspect, the receiving, by the electronic device, neighboring cell measurement configuration information from a network-side device includes: receiving, by the electronic device, the neighboring cell measurement configuration information from the network-side device when the electronic device has a positioning requirement; and after the performing, by the electronic device, neighboring cell measurement on the target frequency, the first frequency, and the second frequency in first preset duration, the method further includes: stopping, by the electronic device, the neighboring cell measurement action if a first preset quantity of pieces of neighboring cell information of neighboring cells is obtained before the first preset duration ends, and determining the first preset quantity of pieces of neighboring cell information of neighboring cells as the neighboring cell measurement result.

When the objective of neighboring cell measurement is positioning, a positioning precision requirement can be met by obtaining a particular amount of neighboring cell information, and more neighboring cell information only causes an increase in power consumption of a mobile phone, and improvement in positioning precision is very smiling. Therefore, based on the foregoing design manner, the electronic device may stop neighboring cell measurement in time after obtaining neighboring cell information sufficient for positioning, to reduce duration consumed for neighboring cell measurement, and reduce power consumption of the electronic device, thereby avoiding the problem that the service of the electronic device cannot be normally used because the neighboring cell measurement duration is excessively long.

In a possible design manner of the first aspect, the target frequency, the first frequency, and the second frequency belong to a first operator; and after the performing, by the electronic device, neighboring cell measurement on the target frequency, the first frequency, and the second frequency, to obtain the neighboring cell measurement result, the method further includes: when a quantity of pieces of neighboring cell information in the neighboring cell measurement result is less than the first preset quantity, selecting, by the electronic device, at least one third frequency from a preset frequency set, and performing neighboring cell measurement on the third frequency, to obtain a supplementary neighboring cell measurement result, and update the neighboring cell measurement result, where the preset frequency set includes a plurality of frequencies, and the plurality of frequencies include frequencies of different operators; and the third frequency does not belong to the first operator.

Based on the foregoing design manner, when the quantity of pieces of neighboring cell information in the neighboring cell measurement result is insufficient for precise positioning, the electronic device may perform measurement on frequencies of other operators, to obtain sufficient neighboring cell information, thereby completing precise positioning, and improving the use experience of the user.

In a possible design manner of the first aspect, a quantity of third frequencies in the at least one third frequency is less than a target quantity, and the target quantity is a sum of a quantity of target frequencies, a quantity of first frequencies, and a quantity of second frequencies.

Based on the foregoing design manner, a problem that the service of the electronic device cannot be normally used because measurement duration for which the electronic device obtains the supplementary neighboring cell measurement result is excessively long can be avoided.

In a possible design manner of the first aspect, the selecting, by the electronic device, at least one third frequency from a preset frequency set, and performing neighboring cell measurement on the third frequency, to obtain a supplementary neighboring cell measurement result includes: selecting, by the electronic device, the at least one third frequency from the preset frequency set, and performing neighboring cell measurement on the third frequency in third preset duration; and stopping, by the electronic device, a neighboring cell measurement action when the third preset duration ends, and determining, as the supplementary neighboring cell measurement result, neighboring cell information of a neighboring cell obtained by performing neighboring cell measurement on the third frequency.

Based on the foregoing design manner, the duration that needs to be consumed for neighboring cell measurement may be limited, thereby avoiding the problem that the service of the electronic device cannot be normally used because the neighboring cell measurement duration is excessively long.

In a possible design manner of the first aspect, after the selecting, by the electronic device, the at least one third frequency from the preset frequency set, and performing neighboring cell measurement on the third frequency in third preset duration, the method further includes: stopping, by the electronic device, the neighboring cell measurement action on the third frequency if a second preset quantity of pieces of neighboring cell information of neighboring cells is obtained before the third preset duration ends, and determining the second preset quantity of pieces of neighboring cell information of neighboring cells as the supplementary neighboring cell measurement result, where the second preset quantity is a difference obtained by subtracting the first preset quantity from the quantity of pieces of neighboring cell information in the neighboring cell measurement result.

Based on the foregoing design manner, neighboring cell measurement may be stopped in time after neighboring cell information sufficient for positioning is obtained, to reduce duration consumed for neighboring cell measurement, and reduce power consumption of the electronic device, thereby avoiding the problem that the service of the electronic device cannot be normally used because the neighboring cell measurement duration is excessively long.

In a possible design manner of the first aspect, after the performing, by the electronic device, neighboring cell measurement on the target frequency, the first frequency, and the second frequency, to obtain the neighboring cell measurement result, the method further includes: reducing, by the electronic device, an increased neighboring cell measurement threshold in the neighboring cell measurement configuration information from the network-side device to an original neighboring cell measurement threshold.

Based on the foregoing design manner, after completing forced neighboring cell measurement once, the electronic device may restore, as soon as possible, the neighboring cell measurement threshold to the original neighboring cell measurement threshold provided by the network-side device. In this way, subsequently, the electronic device may smoothly perform neighboring cell measurement according to original logic.

In a possible design manner of the first aspect, after the performing, by the electronic device, neighboring cell measurement on the target frequency, the first frequency, and the second frequency, to obtain the neighboring cell measurement result, the method further includes: skipping performing, by the electronic device in second preset duration, neighboring cell measurement if a signal quality parameter of a serving cell on which the electronic device camps is greater than the neighboring cell measurement threshold in the neighboring cell measurement configuration information from the network-side device.

Actually, when the signal instruction of the serving cell on which the electronic device camps is good, a forced neighboring cell measurement action is not an action stipulated by the 3GPP protocol, and consumes a large amount of energy of the electronic device. Therefore, to reduce power consumption of the electronic device as much as possible and cause the electronic device to perform neighboring cell measurement according to normal logic in most cases, after the electronic device performs forced neighboring cell measurement to obtain the neighboring cell measurement result, the electronic device needs to stop, in the second preset duration, an action related to forced measurement, that is, stop an action of ignoring the measurement threshold, or stop an action of increasing the neighboring cell measurement threshold. In other words, the technical solution corresponding to the foregoing design manner is implemented. In this way, after completing forced neighboring cell measurement once, the electronic device may perform neighboring cell measurement according to normal measurement logic stipulated by 3GPP, to prevent the mobile phone from performing forced neighboring cell measurement a plurality of times within a short time, thereby reducing power consumption of the electronic device, and improving the use experience of the user.

In a possible design manner of the first aspect, when the electronic device is in the idle state, the neighboring cell measurement configuration information further includes a priority of the target frequency, a priority of each first frequency, and a priority of each second frequency; and the performing, by the electronic device, neighboring cell measurement on the target frequency, the first frequency, and the second frequency, to obtain the neighboring cell measurement result includes: sequentially performing, by the electronic device, neighboring cell measurement on the target frequency, the first frequency, and the second frequency in descending order of the priorities, to obtain the neighboring cell measurement result.

Based on the foregoing design manner, the electronic device may obtain neighboring cell information of different types of neighboring cells through measurement based on priorities, and the priorities may further reflect quantities of neighboring cells or loads of different frequencies. Therefore, based on the technical solution corresponding to the design manner, sufficient neighboring cell information may be obtained more quickly, and loads of different frequencies may be more balanced, to improve stability of an entire communication network, thereby ensuring the use experience of the user.

In a possible design manner of the first aspect, the broadcast message includes at least one system information block SIB, and the at least one SIB carries the neighboring cell measurement configuration information.

Based on the foregoing design manner, the electronic device may smoothly obtain needed neighboring cell measurement information, to smoothly perform subsequent neighboring cell measurement.

In a possible design manner of the first aspect, when the target serving cell is a long term evolution LTE cell, the at least one SIB includes a SIB 3, a SIB 5, and a SIB 24, where the SIB 3 includes the second measurement threshold and the third measurement threshold, the SIB 5 includes the priority of the target frequency, the at least one first frequency, and the priority of the first frequency, and the SIB 24 includes the at least one second frequency and the priority of the second frequency; or when the target serving cell is a new radio NR cell, the at least one SIB includes a SIB 2, a SIB 4, and a SIB 5, where the SIB 2 includes the second measurement threshold and the third measurement threshold, the SIB 4 includes the priority of the target frequency, the at least one first frequency, and the priority of the first frequency, and the SIB 5 includes the at least one second frequency and the priority of the second frequency.

Based on the foregoing design manner, the electronic device may smoothly obtain needed neighboring cell measurement information, to smoothly perform subsequent neighboring cell measurement.

In a possible design manner of the first aspect, the neighboring cell measurement result includes neighboring cell information of a plurality of neighboring cells; the neighboring cell information of the plurality of neighboring cells includes neighboring cell information of a plurality of neighboring cells corresponding to at least one frequency; and the neighboring cell information includes a cell identifier ID and a signal quality parameter.

Based on the foregoing design manner, the neighboring cell measurement result includes the neighboring cell information of the plurality of neighboring cells, and the neighboring cell information may include the cell ID and the signal quality parameter. Therefore, after obtaining the neighboring cell measurement result, the electronic device may complete sufficiently precise positioning based on the neighboring cell measurement result and a proper positioning method, so that the positioning requirement of the electronic device is met. In this way, the function having the positioning requirement in the electronic device may better provide the service to the user, thereby improving the use experience of the user.

In a possible design manner of the first aspect, the signal instruction parameter includes a reference signal received power RSRP or reference signal received quality RSRQ.

Based on the foregoing design manner, the electronic device may use a proper parameter as the signal instruction parameter, so that subsequent neighboring cell measurement can be smoothly performed.

According to a second aspect, an embodiment of this application provides a neighboring cell measurement apparatus. The apparatus may be used in an electronic device. A function of the apparatus may be implemented by using hardware, or may be implemented by hardware executing corresponding software. The hardware or software includes one or more modules corresponding to the foregoing function, such as a communication module and a measurement module.

The communication module is configured to receive neighboring cell measurement configuration information from a network-side device, where the neighboring cell measurement configuration information includes a neighboring cell measurement threshold. The measurement module is configured to perform neighboring cell measurement when a signal quality parameter of a target serving cell is greater than the neighboring cell measurement threshold in the neighboring cell measurement configuration information received by the communication module, to obtain a neighboring cell measurement result.

According to a third aspect, this application provides an electronic device. The electronic device includes: a display screen, a memory, and one or more processors, where the display screen and the memory are coupled to the processor; and the memory stores computer program code, the computer program code includes computer instructions, and when the computer instructions are executed by the processor, the electronic device is caused to perform the neighboring cell measurement method according to the first aspect and any possible design manner thereof.

According to a fourth aspect, this application provides a computer-readable storage medium, where the computer-readable storage medium includes computer instructions, and when the computer instructions are run on an electronic device, the electronic device is caused to perform the neighboring cell measurement method according to the first aspect and any possible design manner thereof.

According to a fifth aspect, this application provides a computer program product. When the computer program product is run on an electronic device, the electronic device is caused to perform the neighboring cell measurement method according to the first aspect and any possible design manner thereof.

It may be understood that, for beneficial effects that can be achieved by the technical solutions provided in the second aspect to the fifth aspect, refer to beneficial effects in the first aspect and any possible design manner thereof. Details are not described herein again.

### BRIEF DESCRIPTION OF DRAWINGS

FIG. 1 is a diagram of a structure of a communication system according to an embodiment of this application;
FIG. 2 is a schematic flowchart of neighboring cell measurement according to a related technology;
FIG. 3 is a schematic flowchart of a neighboring cell measurement method according to an embodiment of this application;
FIG. 4 is a diagram of a hardware structure of an electronic device according to an embodiment of this application;
FIG. 5 is a diagram of a software structure of an electronic device according to an embodiment of this application;
FIG. 6 is a schematic flowchart 1 of a neighboring cell measurement method according to an embodiment of this application;
FIG. 7 is a schematic flowchart 2 of a neighboring cell measurement method according to an embodiment of this application;
FIG. 8 is a schematic flowchart 3 of a neighboring cell measurement method according to an embodiment of this application;
FIG. 9 is a diagram of a scenario of neighboring cell measurement according to an embodiment of this application;
FIG. 10 is a schematic flowchart 4 of a neighboring cell measurement method according to an embodiment of this application;
FIG. 11 is a schematic flowchart 5 of a neighboring cell measurement method according to an embodiment of this application;
FIG. 12 is a schematic flowchart 6 of a neighboring cell measurement method according to an embodiment of this application;
FIG. 13 is a schematic flowchart 7 of a neighboring cell measurement method according to an embodiment of this application;
FIG. 14 is a schematic flowchart 8 of a neighboring cell measurement method according to an embodiment of this application;
FIG. 15 is a schematic flowchart 9 of a neighboring cell measurement method according to an embodiment of this application;
FIG. 16 is a diagram of a structure of a neighboring cell measurement apparatus according to an embodiment of this application;
FIG. 17 is a diagram of a structure of a chip system according to an embodiment of this application; and
FIG. 18 is a diagram of a structure of a computer program product according to an embodiment of this application.

### DESCRIPTION OF EMBODIMENTS

Terms used in the following embodiments of this application are only intended to describe particular embodiments, and are not intended to limit this application. As used in this specification and the claims of this application, a singular expression form, "one", "a", "said", "foregoing", "the", or "this", is intended to also include a plural expression form, unless clearly indicated to the contrary in the context. It should be further understood that, "/" indicates "or". For example, A/B may indicate A or B. "And/Or" in this specification is merely an association relationship for describing associated objects, and indicates that three relationships may exist. For example, A and/or B may indicate that A exists alone, both A and B exist, and B exists alone.

"Embodiment" mentioned in this application means that particular features, structures, or characteristics described with reference to the embodiment may be included in at least one embodiment of this application. The term appearing at different positions of this specification may not refer to the same embodiment or an independent or alternative embodiment that is mutually exclusive with another embodiment. A person skilled in the art explicitly or implicitly understands that the embodiments described in this application may be combined with other embodiments.

In the following embodiments of this application, terms "first" and "second" are used merely for the purpose of description, and shall not be construed as indicating or implying relative importance or implying a quantity of indicated technical features. Therefore, a feature defined to be "first" or "second" may explicitly or implicitly include one or more features. In the description of embodiments of this application, unless otherwise stated, "a plurality of" means two or more.

First, terms involved in embodiments of this application are introduced as follows:
Frequency: a specific frequency used in wireless communication. The frequency indicates a position of a radio signal in a spectrum, and is for transmitting and receiving data. The frequency is usually represented in Hertz (Hz).

Intra-frequency cell cell: a serving cell belonging to a communication system the same as a communication system to which a serving cell on which a user terminal currently camps belongs (or belonging to a communication standard the same as a communication standard to which the serving cell on which the user terminal currently camps belongs), and whose frequency is the same as a frequency of the serving cell on which the user terminal currently camps.

Inter-frequency neighboring cell: a serving cell belonging to a communication system the same as the communication system to which the serving cell on which the user terminal currently camps belongs, and whose frequency is different from the frequency of the serving cell on which the user terminal currently camps.

Inter-system neighboring cell: a serving cell belonging to a communication system different from the communication system to which the serving cell on which the user terminal currently camps belongs (or belonging to a communication standard different from the communication standard to which the serving cell on which the user terminal currently camps belongs). The communication system is a communication system corresponding to a particular communication standard, for example, an LTE communication system, or a 5th generation mobile communication technology (5th generation mobile communication technology, 5G) communication system.

Reconfiguration reconfiguration message: Usually, the reconfiguration message may be specifically a radio resource control (radio resource control, RRC) reconfiguration message. The RRC reconfiguration message is a type of message that is sent to the user terminal via a base station by using an RRC layer and that is for modifying or reconfiguring information such as a radio parameter, a network configuration, and a service parameter of the user terminal. Usually, after the user terminal registers to access a network via the base station, if the user terminal is in a connected state for data transmission or a voice call, the base station may send the RRC reconfiguration message to the user terminal through an RRC connection. A specific sending occasion may be after the user terminal sends a corresponding RRC reconfiguration request to the base station when needing to perform positioning in a neighboring cell measurement manner, or may be when the base station determines that the user terminal needs to perform neighboring cell measurement. The RRC reconfiguration message may include a first measurement threshold corresponding to a neighboring cell (including an intra-frequency neighboring cell, an inter-frequency neighboring cell, and an inter-system neighboring cell), at least one first frequency corresponding to the inter-frequency neighboring cell, and at least one second frequency corresponding to the inter-system neighboring cell.

It should be noted that, the inter-frequency neighboring cell in the at least one first frequency corresponding to the inter-frequency neighboring cell is not one cell, but is a type of cell. In other words, the at least one first frequency corresponding to the inter-frequency neighboring cell may specifically include at least one first frequency whose specific value is different from that of the frequency of the serving cell on which the user terminal currently camps, and a communication system to which the first frequency belongs is the same as a communication system to which the frequency of the serving cell on which the user terminal currently camps belongs. Cells corresponding to such first frequencies are inter-frequency neighboring cells of the serving cell on which the user terminal currently camps.

The inter-system neighboring cell in the at least one second frequency corresponding to the inter-system neighboring cell is not one cell, but is a type of cell. In other words, the at least one second frequency corresponding to the inter-frequency neighboring cell may specifically include at least one second frequency belonging to a communication system different from the communication system to which the frequency of the serving cell on which the user terminal currently camps belongs. Cells corresponding to such second frequencies are inter-system neighboring cells of the serving cell on which the user terminal currently camps.

For example, according to third generation partnership project (third generation partnership project, 3GPP) 36331 and 38331, related code of the first measurement threshold in the RRC reconfiguration message may be as follows:

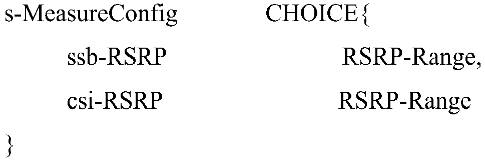

RSRP-Range corresponding to ssb-RSRP is a specific value of the first measurement threshold when a reference signal received power (reference signal receiving power, RSRP) obtained by using channel state information (channel state information, CSI) is used as a signal quality parameter. RSRP-Range corresponding to csi-RSRP is a specific value of the first measurement threshold when a reference signal received power (reference signal receiving power, RSRP) obtained by using a synchronization signal block (synchronization signal block, SSB) is used as the signal quality parameter. Generally, during neighboring cell measurement, because ssb-RSRP may provide related information of cell search and synchronization that are related to the neighboring cell measurement, RSRP-Range corresponding to ssb-RSRP may be used as the first measurement threshold.

The first measurement threshold, the at least one first frequency, and the at least one second frequency are neighboring cell measurement configuration information, and may be specifically referred to as neighboring cell measurement configuration information corresponding to the connected state.

System information block (system information block, SIB): a message type for transferring system information in a wireless communication system. Usually, after the user terminal registers to access the network via the base station, if the user terminal is in an idle state not for data transmission or a voice call, the base station periodically sends a broadcast message to the user terminal on a broadcast channel (broadcast channel, BCCH). The broadcast message may include one or more SIBs. The SIBs may include neighboring cell measurement configuration information needed by the user terminal to perform neighboring cell measurement.

For example, an example in which the cell on which the user terminal currently camps is an LTE cell is used. The broadcast message may include a SIB 3, a SIB 5, and a SIB 24. The SIB 3 may include a second measurement threshold of the intra-frequency neighboring cell, and a third measurement threshold of the inter-frequency neighboring cell and the inter-system neighboring cell. For example, according to third generation partnership project (third generation partnership project, 3GPP) 36331 and 38331, related code of configuration information including the second measurement threshold in the SIB 3 may be as follows:

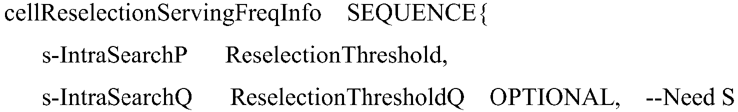

ReselectionThreshold is a specific value of the second measurement threshold when a reference signal received power (reference signal receiving power, RSRP) is used as the signal quality parameter; and ReselectionThreshold is a specific value of the second measurement threshold when reference signal received quality (Reference signal receiving quality, RSRQ) is used as the signal quality parameter.

Related code of configuration information including the third measurement threshold in the SIB 3 may be as follows:

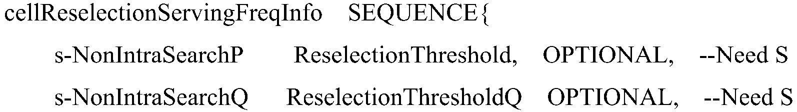

Similarly, ReselectionThreshold is a specific value of the third measurement threshold when the reference signal received power (reference signal receiving power, RSRP) is used as the signal quality parameter; and ReselectionThreshold is a specific value of the third measurement threshold when the reference signal received quality (Reference signal receiving quality, RSRQ) is used as the signal quality parameter.

Generally, during neighboring cell measurement, the RSRP is usually used as the signal quality parameter to measure signal quality of a neighboring cell. This is because the RSRP is an indicator for directly measuring received signal strength, can provide an absolute value about the signal strength, and has comparability between different cells. In comparison, the RSRQ is an indicator for measuring received signal quality, and considers signal strength and an interference level. The RSRQ is calculated by comparing the RSRP with the interference level, and therefore focuses on evaluating signal quality rather than only the strength. In general, the RSRP is selected as the signal quality parameter for neighboring cell measurement because the RSRP provides direct signal strength measurement and has comparability between different cells. This helps a network perform operations such as cell handover and resource allocation.

The SIB 5 may include the at least one first frequency that needs to be measured and that corresponds to the inter-frequency neighboring cell, and the SIB 24 may include the at least one second frequency corresponding to the inter-system neighboring cell. An inter-system may be a 5th generation mobile communication technology (5th generation mobile communication technology, 5G) system. In some embodiments, the SIB 5 may further include a priority of a target frequency and a frequency priority of each of the at least one first frequency corresponding to the inter-frequency neighboring cell, and the SIB 24 may further include a frequency priority of each of the at least one second frequency corresponding to the inter-system neighboring cell.

For another example, an example in which the cell on which the user terminal currently camps is an NR cell is used. The broadcast message may include a SIB 2, a SIB 4, and a SIB 5. The SIB 2 may include a second measurement threshold of the intra-frequency neighboring cell, and a third measurement threshold of the inter-frequency neighboring cell and the inter-system neighboring cell. For related code of the second measurement threshold and the third measurement threshold in the SIB 2, refer to the related code of the second measurement threshold and the third measurement threshold in the SIB 3. Details are not described herein again. The SIB 4 may include the at least one first frequency that needs to be measured and that corresponds to the inter-frequency neighboring cell, and the SIB 5 may include the at least one second frequency that needs to be measured and that corresponds to the inter-system neighboring cell. In some embodiments, the SIB 4 may include the at least one second frequency that needs to be measured and that corresponds to the inter-system neighboring cell, and the SIB 5 may include the at least one first frequency that needs to be measured and that corresponds to the inter-frequency neighboring cell. In some embodiments, the SIB 4 may further include a frequency priority of each of the at least one first frequency corresponding to the inter-frequency neighboring cell, and the SIB 5 may further include a frequency priority of each of the at least one second frequency corresponding to the inter-system neighboring cell. In some embodiments, the SIB 4 may further include a priority of a target frequency and the frequency priority of each of the at least one second frequency corresponding to the inter-system neighboring cell, and the SIB 5 may further include the frequency priority of each of the at least one first frequency corresponding to the inter-frequency neighboring cell.

The second measurement threshold, the third measurement threshold, the at least one first frequency, the at least one second frequency, and each frequency priority are neighboring cell measurement configuration information, and may be specifically referred to as neighboring cell measurement configuration information corresponding to the idle state.

Certainly, the foregoing descriptions of the SIBs are merely examples. Actually, the SIB 2, the SIB 3, the SIB 4, the SIB 5, the SIB 24, and even other SIBs may further include any other possible system information. Further, in some embodiments, information about any one of the SIB 2, the SIB 3, the SIB 4, the SIB 5, the SIB 24, and even the other SIBs may include the neighboring cell measurement configuration information with the second measurement threshold, the third measurement threshold, the at least one first frequency, the at least one second frequency, and each frequency priority.

In current communication technologies, the user terminal needs to be positioned in many possible cases (for example, an application needs to be positioned). However, for better positioning, the terminal needs to perform measurement on a neighboring cell (for example, an intra-frequency neighboring cell, an inter-frequency neighboring cell, and an inter-system neighboring cell) of the server cell, to obtain cell information (for example, a neighboring cell ID and a signal quality parameter) of the neighboring cell, thereby assisting in completing positioning. To make the user terminal do not frequently perform neighboring cell measurement and reduce power consumption, a network-side device configures, for the user terminal in the idle state and the connected state, a neighboring cell measurement threshold (including respective measurement thresholds of the intra-frequency neighboring cell, the inter-frequency neighboring cell, and the inter-system neighboring cell). Only when a value of signal quality (which may be specifically signal quality of a downlink signal) of the serving cell on which the user terminal camps is less than the neighboring cell measurement threshold, the corresponding neighboring cell is measured. When the value of the signal quality parameter of the serving cell on which the user terminal camps is greater than the neighboring cell measurement threshold, the corresponding neighboring cell is not measured.

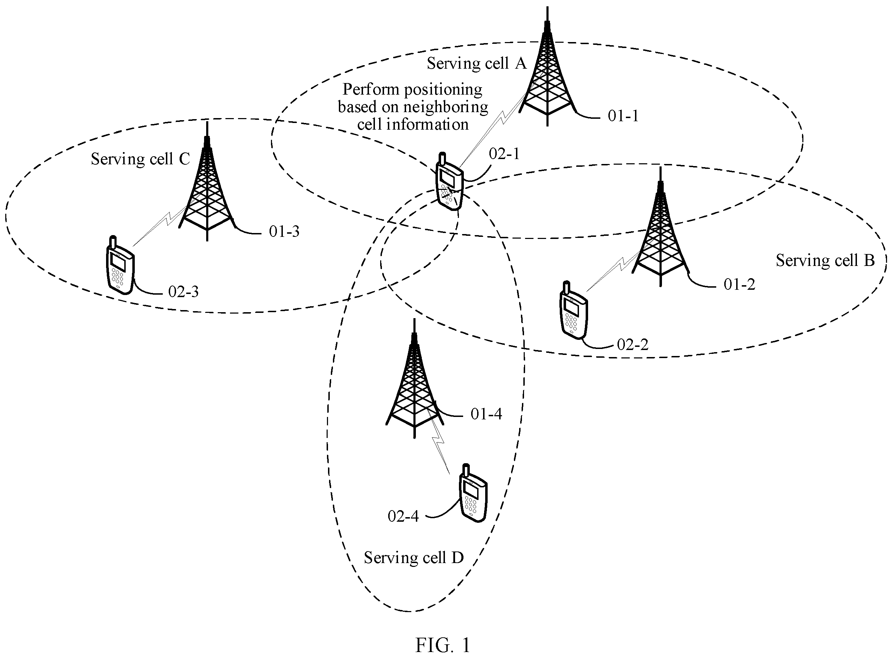

For example, FIG. 1 is a diagram of a structure of a communication system to which a user terminal belongs when the user terminal performs neighboring cell measurement. As shown in FIG. 1, the communication system may include a plurality of network-side devices 01 and a plurality of user terminals 02. In FIG. 1, an example in which the plurality of network-side devices 01 include a network-side device 01-1, a network-side device 01-2, a network-side device 01-3, and a network-side device 01-4 is used, and an example in which the plurality of user terminals 02 include a user terminal 02-1, a user terminal 02-2, a user terminal 02-3, and a user terminal 02-4 is used as for illustration.

At least one user terminal 02 may be distributed in a serving cell managed by each network-side device 01. After a user terminal 01 is powered on in a serving cell managed by a network-side device 01, the user terminal 01 may register to access the network via the network-side device 01. Ranges of serving cells managed by different network-side devices 01 may have an intersection. For example, a serving cell A managed by the network-side device 01-1, a serving cell B managed by the network-side device 01-2, a serving cell C managed by the network-side device 01-3, and a serving cell D managed by the network-side device 01-4 shown in FIG. 1 have an intersection. Alternatively, ranges of serving cells managed by different network-side devices 01 may not have an intersection.

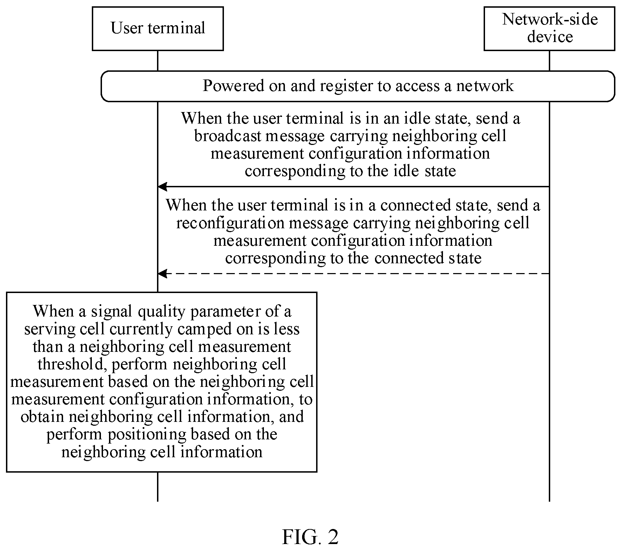

Based on the communication system shown in FIG. 1, refer to FIG. 2. An existing neighboring cell measurement process may include:
After power-on, a user terminal registers to access a network via a network-side device, to establish a communication connection. The network-side device may be a base station.

Then, when the user terminal is in a connected state, when the user terminal has a requirement of needing to perform neighboring cell measurement to complete positioning, the network-side device may send a reconfiguration message to the user terminal. The reconfiguration message may carry neighboring cell measurement configuration information corresponding to the connected state. The neighboring cell measurement configuration information corresponding to the connected state may include a first measurement threshold of an intra-frequency neighboring cell, an inter-frequency neighboring cell, and an inter-system neighboring cell, at least one first frequency corresponding to the inter-frequency neighboring cell, and at least one second frequency corresponding to the inter-system neighboring cell.

When the user terminal is in an idle state, the network-side device and the user terminal have only a few communication connections, to support mobility management and network access of the user terminal by the network-side device. For example, when the user terminal is in the idle state, the communication connection between the network-side device and the user terminal may include a broadcast channel.

When the user terminal is in the idle state, the network-side device periodically sends a broadcast message to the user terminal on the broadcast channel. The broadcast message may include neighboring cell measurement configuration information corresponding to the idle state. For example, the neighboring cell measurement configuration information may include a second measurement threshold of an intra-frequency neighboring cell, a third measurement threshold of an inter-frequency neighboring cell and an inter-system neighboring cell, at least one first frequency corresponding to the inter-frequency neighboring cell, and at least one second frequency corresponding to the inter-system neighboring cell. The neighboring cell measurement configuration information may further include a priority of each of the at least one first frequency and the at least one second frequency.

For a specific system information block used in the broadcast message to carry the neighboring cell measurement configuration information, refer to related descriptions for the system information block in the foregoing embodiments. Details are not described herein again.

Then, the user terminal may perform neighboring cell measurement based on the neighboring cell measurement configuration information from the network-side device, and position a serving cell currently camped on based on a measurement result. For example, as shown in FIG. 1, the user terminal 02-1 may perform positioning based on three pieces of neighboring cell information of three neighboring cells of the serving cell A obtained through measurement: the serving cell B, the serving cell C, and the serving cell D.

When the user terminal is in the idle state, the user terminal may perform neighboring cell measurement based on the neighboring cell measurement configuration information that corresponds to the idle state and that is from the network-side device. Specifically, when the user terminal is in the idle state, for the objective of energy saving, the user terminal first determines whether a signal quality parameter of the serving cell currently camped on is greater than the second measurement threshold and greater than the third measurement threshold. Only when the signal quality parameter of the serving cell currently camped on is less than the second measurement threshold, the user terminal performs neighboring cell measurement on a target frequency to which the serving cell currently camped on belongs. Only when the signal quality parameter of the serving cell currently camped on is less than the third measurement threshold, the user terminal performs neighboring cell measurement on the first frequency and the second frequency in the neighboring cell measurement configuration information. However, if the signal quality parameter of the serving cell currently camped on is greater than the second measurement threshold and/or the third measurement threshold, the user terminal may perform neighboring cell measurement on only a frequency to which the serving cell currently camped on belongs, may perform neighboring cell measurement on only the first frequency and the second frequency, or does not perform neighboring cell measurement.

When the user terminal is in the connected state, the user terminal may perform neighboring cell measurement based on the neighboring cell measurement configuration information that corresponds to the connected state and that is from the network-side device. Specifically, when the user terminal is in the connected state, for the objective of energy saving, the user terminal first determines whether a signal quality parameter of the serving cell currently camped on is greater than the first measurement threshold. Only when the signal quality parameter of the serving cell currently camped on is less than the first measurement threshold, the user terminal performs neighboring cell measurement on a frequency to which the serving cell currently camped on belongs, the first frequency, and the second frequency. If the signal quality parameter of the serving cell currently camped on is greater than the first measurement threshold, the user terminal does not perform neighboring cell measurement.

It can be learned that in an existing neighboring cell measurement solution, if signal quality of the serving cell on which a user currently camps is good, the user terminal cannot perform neighboring cell measurement, or can perform measurement on only a small quantity of frequencies. In this way, when needing to perform positioning based on neighboring cell information, the user terminal cannot obtain sufficient neighboring cell information, and therefore cannot complete precise positioning. In addition, a precise positioning-based service on the user terminal cannot be well provided to a user, degrading use experience of the user.

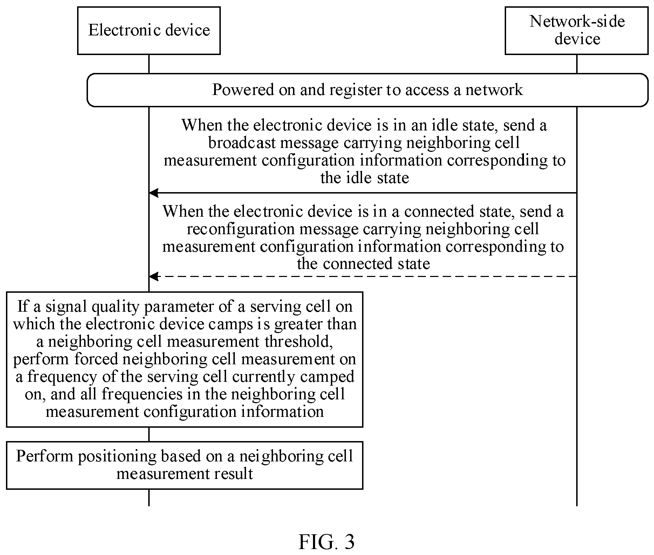

For the foregoing technical problem, an embodiment of this application provides a neighboring cell measurement method, applied to an electronic device (or referred to as a user terminal). In the technical solution, as shown in FIG. 3, after starting to register to access a network, the electronic device may receive, in an idle state, neighboring cell measurement configuration information that corresponds to the idle state and that is from a network-side device, or receive, in a connected state, neighboring cell measurement configuration information that corresponds to the connected state and that is from the network-side device. Then, if a signal quality parameter of a serving cell on which the electronic device camps is greater than a neighboring cell measurement threshold (a first measurement threshold, a second measurement threshold, or a third measurement threshold) in the neighboring cell measurement configuration information, the electronic device may perform forced neighboring cell measurement on a frequency of the serving cell on which the electronic device currently camps and all frequencies (a first frequency and a second frequency) in the neighboring cell measurement configuration information, to obtain a neighboring cell measurement result, that is, obtain neighboring cell information of a plurality of neighboring cells. A forced manner may be increasing the neighboring cell measurement threshold, to cause the neighboring cell measurement threshold to be greater than the signal quality parameter of the serving cell on which the electronic device camps; or ignoring the neighboring cell measurement threshold.

If the signal quality parameter of the serving cell on which the electronic device camps is less than the neighboring cell measurement threshold (the first measurement threshold, the second measurement threshold, or the third measurement threshold) in the neighboring cell measurement configuration information, the electronic device may perform neighboring cell measurement on the frequency of the serving cell currently camped on and all the frequencies (the first frequency and the second frequency) in the neighboring cell measurement configuration information according to an existing solution, to obtain a neighboring cell measurement result, that is, obtain neighboring cell information of a plurality of neighboring cells.

Then, the electronic device may position the electronic device based on the neighboring cell measurement result.

It can be learned that, in the technical solution provided in this embodiment of this application, when signal quality of the serving cell on which the electronic device camps is good, the electronic device may also perform complete neighboring cell measurement, to obtain neighboring cell information sufficient for positioning. Then, the electronic device may also complete positioning based on the sufficient neighboring cell information, so that a positioning requirement of the electronic device is met. In this way, a function having the positioning requirement in the electronic device may better provide a service to a user, thereby improving use experience of the user.

The following describes technical solutions provided in embodiments of this application in detail with reference to accompanying drawings.

The technical solutions provided in this application may be applied to the electronic device. In some embodiments, the electronic device may be a mobile phone, a tablet computer, a handheld computer, a personal computer (personal computer, PC), an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, or a smart home device and/or a smart city device. A specific type of the electronic device is not specifically limited in embodiments of this application.

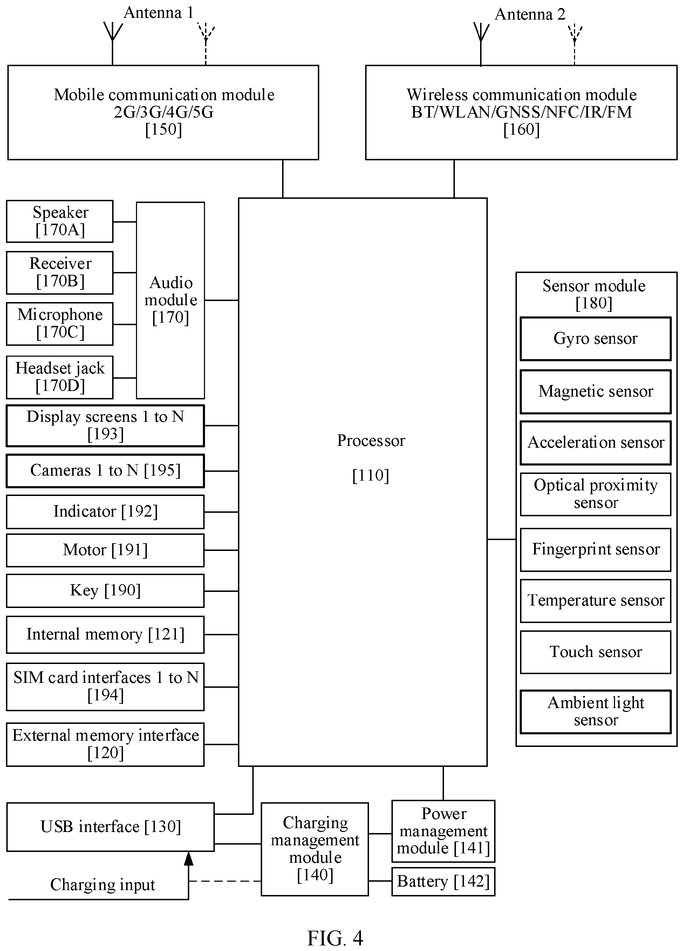

For example, an example in which the electronic device is a mobile phone is used. FIG. 4 is a diagram of a hardware structure of an electronic device according to an embodiment of this application.

As shown in FIG. 4, the electronic device may include a processor 110, an external memory interface 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a display screen 193, a subscriber identification module (subscriber identification module, SIM) card interface 194, a camera 195, and the like. The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, and a touch sensor, an ambient light sensor, a bone conduction sensor, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device. The controller may generate an operation control signal based on an instruction operation code and a time-sequence signal, to implement control of fetching instructions and executing the instructions.

The processor 110 may be further configured with a memory, to store instructions and data. In some embodiments, the memory in the processor 110 is a cache. The memory may store instructions or data recently used or cyclically used by the processor 110. If the processor 110 needs to use the instructions or the data again, the processor 110 may directly invoke the instructions or the data from the memory, which avoids repeated access, and reduces waiting time of the processor 110, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive charging input from a power supply device (for example, a charger or notebook computer energy). The charger may be a wireless charger, or may be a wired charger. In some embodiments of wired charging, the charging management module 140 may receive charging input of the wired charger through the USB interface 130. In some embodiments of wireless charging, the charging management module 140 may receive wireless charging input by using a wireless charging coil of the electronic device.

The charging management module 140 may further supply power to the electronic device by using the power management module 141 while charging the battery 142. The battery 142 may be specifically a plurality of cells formed in series. The power management module 141 is configured to connect to the battery 142, the charging management module 140, and the processor 110.

The power management module 141 is configured to connect to the battery 142, the charging management module 140, and the processor 110. The power management module 141 receives input of the battery 142 and/or the charging management module 140, and supplies power for the processor 110, the internal memory 121, the display screen 193, the camera 195, the wireless communication module 160, and the like. The power management module 141 may be further configured to monitor parameters such as a battery pressure, a current, a battery cycle count, and a battery health status (electric leakage and impedance). In some other embodiments, the power management module 141 may alternatively be disposed in the processor 110.

The external memory interface 120 may be configured to connect to an external non-volatile memory, to expand a storage capability of the electronic device. The external non-volatile memory communicates with the processor 110 through the external memory interface 120, to implement a data storage function, for example, storing a file such as a music or a video in the external non-volatile memory.

The internal memory 121 may be one or more random access memories (random access memory, RAM), and one or more non-volatile memories (non-volatile memory, NVM). The random access memory may be directly read and written by the processor 110, may be configured to store executable programs (such as machine instructions) of an operating system or another running program, and may also be configured to store data of users and applications. The non-volatile memory may also store the executable programs, the data of the users and the applications, and the like, and may be loaded into the random access memory in advance, to be directly read and written by the processor 110.

The touch sensor is also referred to as a "touch device". The touch sensor may be disposed on the display screen 193. The touch sensor and the display screen 193 form a touchscreen, which is also referred to as a "touchscreen". The touch sensor is configured to monitor a touch operation performed on or near the touch sensor. The touch sensor may transfer the monitored touch operation to the application processor to determine a type of the touch event. The touch sensor may provide a visual output related to the touch operation by using the display screen 193. In some other embodiments, the touch sensor may alternatively be disposed on a surface of the electronic device, and is located on a position different from that of the display screen 193.

The ambient light sensor is configured to sense brightness of ambient light. For example, the ambient light sensor may measure light brightness of four channels of the ambient light. The ambient light sensor outputs the measured light brightness of the four channels of the ambient light to the processor 110. The processor 110 may process the light brightness of the four channels of the ambient light output by the ambient light sensor to obtain the light brightness of the ambient light. In a screen-on state, the electronic device may adaptively adjust brightness of the display screen based on the obtained light brightness of the ambient light.

The pressure sensor is configured to sense a pressure signal, and may convert the pressure signal into an electrical signal. In some embodiments, the pressure sensor may be disposed in the display screen 193. There are many types of pressure sensors, such as a resistive pressure sensor, an inductive pressure sensor, and a capacitive pressure sensor. When a touch operation is acted on the display screen 193, the electronic device monitors strength of the touch operation by using the pressure sensor. The electronic device may further calculate a position of the touch based on a monitoring signal of the pressure sensor. In some embodiments, the touch operations that are performed at a same touch position but have different touch operation strength may correspond to different operation instructions. For example, when a touch operation whose touch operation strength is less than a first pressure threshold is performed on an SMS message application icon, an instruction of viewing an SMS message is executed. When a touch operation whose touch operation strength is greater than or equal to the first pressure threshold is performed on the SMS message application icon, an instruction of creating an SMS message is executed.

In some embodiments, the electronic device may include one or N cameras 195, and N is a positive integer greater than 1. In this embodiment of this application, types of the cameras 195 may be distinguished according to hardware configurations and physical positions. For example, a camera disposed on a surface of the display screen 193 of the electronic device may be referred to as a front-facing camera, and a camera disposed on a surface of a rear cover of the electronic device may be referred to as a rear-facing camera. For another example, a camera with a short focal length and a larger viewing angle may be referred to as a wide-angle camera, and a camera with a long focal length and a smaller viewing angle may be referred to as an ordinary camera. A length of a focal length and a size of a viewing angle are relative concepts, and there are no specific parameter limitations. Therefore, the wide-angle camera and the ordinary camera are also relative concepts, and can be specifically distinguished based on physical parameters such as the focal length and the viewing angle.

The electronic device implements a display function by using the GPU, the display screen 193, the application processor, and the like. The GPU is a microprocessor for image editing, and is connected to the display screen 193 and the application processor. The GPU is configured to perform mathematical and geometric calculation, and is configured to render an image. The processor 110 may include one or more GPUs that execute program instructions to generate or change display information.

The electronic device may implement a photographing function by using the ISP, the camera 195, the video codec, the GPU, the display screen 193, the application processor, and the like. The GPU is configured to perform mathematical and geometric calculation, and is configured to render an image. The processor 110 may include one or more GPUs that execute program instructions to generate or change display information. In this embodiment of this application, during frame drawing of each image frame, a function of the GPU is used, so that a finally displayed image has a better display effect and better performance.

The ISP is configured to process data fed back by the camera 195. For example, during photographing, a shutter is enabled. Light is transferred to a photosensitive element of the camera through a lens, and an optical signal is converted into an electrical signal. The photosensitive element of the camera transfers the electrical signal to the ISP for processing, and therefore, the electrical signal is converted into an image visible to a naked eye. The ISP may further optimize an algorithm for noise and brightness of an image. The ISP may further optimize parameters such as exposure and a color temperature of a photographing scene. In some embodiments, the ISP may be disposed in the camera 195. The camera 195 is configured to capture a still image or a video.

The digital signal processor is configured to process a digital signal, and may further process another digital signal in addition to a digital image signal. For example, when the electronic device performs frequency selection, the digital signal processor is configured to perform Fourier transform and the like on frequency energy.

The display screen 193 is configured to display an image, a video, or the like. The display screen 193 includes a display panel. The display panel may use a liquid crystal display screen (liquid crystal display, LCD), an organic light-emitting diode (organic light-emitting diode, OLED), a passive matrix/organic light-emitting diode or an active matrix/organic light-emitting diode (active-matrix organic light emitting diode, AMOLED), a flexible light-emitting diode (flex light-emitting diode, FLED), a Miniled, a MicroLed, a Micro-oLed, a quantum dot light-emitting diode (quantum dot light emitting diodes, QLED), or the like. In some embodiments, the electronic device may include one or N display screens 193, and N is a positive integer greater than 1.

In this embodiment of this application, the display screen 193 may be configured to display a page (for example, a wizard page (including a highlight recommendation page and an external module access page)) required by the electronic device, and display, on the interface, an image captured by any one or more cameras 195.

A wireless communication function of the electronic device may be implemented by using the antenna 1, the antenna 2, the mobile communication module 150, the wireless communication module 160, the modem, the baseband processor, and the like.

The antenna 1 and the antenna 2 are configured to transmit and receive electromagnetic wave signals. Each antenna in the electronic device may be configured to cover one or more communication frequency bands. Different antennas may also be multiplexed to improve utilization of the antennas.

The mobile communication module 150 may provide a solution to wireless communication such as 2G/3G/4G/5G applied to the electronic device. The mobile communication module 150 may receive an electromagnetic wave by using the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave by using the antenna 1 for radiation. In some embodiments, at least some functional modules of the mobile communication module 150 may be disposed in the processor 110. In some embodiments, at least some functional modules of the mobile communication module 150 and at least some modules of the processor 110 may be disposed in the same device.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Next, the demodulator transmits the demodulated low-frequency baseband signal to the baseband processor for processing. The low-frequency baseband signal is processed by the baseband processor and is then transferred to the application processor. The application processor outputs a sound signal through an audio device (which is not limited to the speaker 170A, the receiver 170B, and the like), or displays an image or a video through the display screen 193. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device. The wireless communication module 160 may be one or more devices that integrate at least one communication processing module. The wireless communication module 160 receives an electromagnetic wave by using the antenna 2, performs frequency modulation on and filters the electromagnetic wave signal, and sends a processed signal to the processor 110. The wireless communication module 160 may further receive a to-be-sent signal from the processor 110, perform frequency modulation on and amplify the to-be-sent signal, and convert the to-be-sent signal into an electromagnetic wave by using the antenna 2 for radiation.

The SIM card interface 194 is configured to connect to a SIM card. The SIM card may be inserted into the SIM card interface 194 or plugged from the SIM card interface 194, to come into contact with or be separated from the electronic device. The electronic device may support one or more SIM card interfaces. The SIM card interface 194 may support a nano-SIM card, a Micro-SIM card, a SIM card, and the like. A plurality of cards may be inserted into a same SIM card interface 194. The SIM card interface 194 may also be compatible with an external storage card. The electronic device exchanges with a network by using a SIM card, to implement functions such as a call and data communication. One SIM card corresponds to one user number.

It may be understood that an interface connection relationship between the modules illustrated in this embodiment of the present invention is merely an example for description, and does not constitute a limitation on a structure of the electronic device. In some other embodiments of this application, the electronic device may alternatively use an interface connection manner different from that in the foregoing embodiment, or use a combination of a plurality of interface connection manners.

Certainly, it may be understood that FIG. 4 is merely an exemplary description when the electronic device is in the form of the mobile phone. If the electronic device is in another device form like a tablet computer, a handheld computer, a PC, a PDA, or a wearable device (for example, a smart watch or a smart band), a structure of the electronic device may include fewer structures than those shown in FIG. 4, or may include more structures than those shown in FIG. 4. This is not limited herein.

It may be understood that generally, implementation of functions of the electronic device needs hardware support, and also needs software cooperation. A software system of the electronic device may use a layered architecture, an event-driven architecture, a micro core architecture, a micro service architecture, or a cloud architecture. In this embodiment of this application, the software structure of the electronic device is illustrated by using an Android^{®} system with a layered architecture as an example.

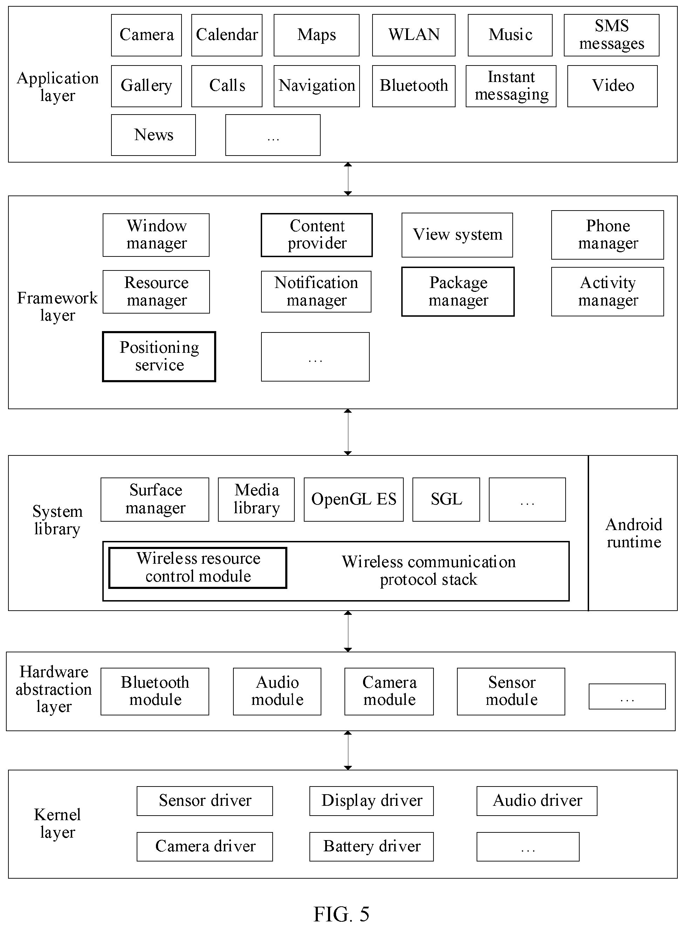

FIG. 5 is a diagram of a layered architecture of a software system of an electronic device according to an embodiment of this application. In the layered architecture, software is divided into several layers, and each layer has a clear role and task. Layers communicate with each other through a software interface (for example, an API).

In some examples, as shown in FIG. 5, in this embodiment of this application, the software of the electronic device is divided into five layers: an application layer, a framework layer (or referred to as an application framework layer), a system library and Android runtime (Android runtime), a hardware abstraction layer (hardware abstraction layer, HAL), and a kernel layer (or referred to as a driver framework layer) from top to bottom. The system library and Android runtime may alternatively be referred to as a local framework layer or a native layer.

The application layer may include a series of applications. As shown in FIG. 5, the application layer may include applications (applications, APPs) such as camera, gallery, calendar, maps, WLAN, Bluetooth, music, videos, SMS messages, calls, navigation, and instant messaging.

The framework layer provides an application programming interface (application programming interface, API) and a programming framework for the applications at the application layer. The application framework layer includes some predefined functions or services. For example, the application framework layer may include an activity manager, a window manager, a content provider, a view system, a phone manager, a resource manager, a notification manager, a package manager, and the like. This is not limited in embodiments of this application.

The window manager is configured to manage a window program. The window manager may obtain a size of a display screen, determine whether there is a status bar, lock a screen, capture a screen, and the like. The content provider is configured to store and obtain data and make the data accessible to an application. The data may include a video, an image, an audio, calls made and answered, a browsing history and bookmarks, an address book, and the like. The view system includes a visual control such as a control for text display or a control for picture display. The view system may be configured to construct a display interface of an application. The phone manager is configured to provide a communication function of the electronic device. For example, the phone manager may manage a call state (including initiating, getting through, hang-up, and the like) of a call application. The resource manager provides various resources such as a localized character string, an icon, a picture, a layout file, and a video file for an application. The notification manager enables an application to display notification information in the status bar that may be used to convey a message of a notification type, where the message may disappear automatically after a short stay without user interaction. The package manager is configured to manage an application package in the Android^{®} system, and allows an application to obtain detailed information about installed applications, services and permissions thereof, and the like. The package manager is further configured to manage events such as installation, uninstallation, and upgrade of the application. The activity manager is configured to manage a life cycle and a window state of the application.

In this embodiment of this application, the framework layer may further include a positioning service. The positioning service may determine a position of the electronic device based on neighboring cell information of a plurality of neighboring cells when a radio resource control module of the system library obtains the neighboring cell information of the plurality of neighboring cells of a serving cell on which the electronic device currently camps. The determining method may be any feasible positioning method. This is not specifically limited in this application.

The system library may include a plurality of functional modules, such as a surface manager (surface manager), a media library (media libraries), an OpenGL ES, and an SGL.

The surface manager is configured to manage a display subsystem and provide fusion of 2D and 3D layers for a plurality of applications. The media library supports playback and recording in a plurality of common audio and video formats, a static image file, and the like. The media library may support a plurality of audio and video encoding formats such as MPEG4, H.264, MP3, AAC, AMR, JPG, and PNG. The OpenGL ES is configured to implement drawing of three-dimensional graphics, image rendering, synthesis, layer processing, and the like. The SGL is a drawing engine for 2D drawing.

As shown in FIG. 5, the system library may further include a wireless communication protocol stack. The wireless communication protocol stack is a group of protocols and algorithms for managing and controlling wireless communication. The wireless communication protocol stack may manage and control various aspects of wireless communication in the electronic device, to ensure reliability, efficiency, and security of wireless communication.

The wireless communication protocol stack may include the radio resource control module. The radio resource control module may manage and control a process in which the electronic device performs neighboring cell measurement. In this embodiment of this application, after the electronic device receives neighboring cell measurement configuration information from a network-side device, when a signal quality parameter of the serving cell on which the electronic device currently camps is greater than a neighboring cell measurement threshold in the neighboring cell measurement configuration information, the radio resource control module may also control the electronic device to perform forced neighboring cell measurement. In this way, a neighboring cell measurement result is obtained, and may specifically include the neighboring cell information of the plurality of neighboring cells (for example, cell IDs and signal quality parameters of the neighboring cells). Then, the radio resource control module may provide the obtained neighboring cell measurement result to the positioning service at the framework layer, for the positioning service to perform positioning.

The Android runtime (android runtime) includes a core library and an ART virtual machine. The Android runtime is responsible for scheduling and management of the Android system. The core library includes two parts: One part is a performance function that the Java language needs to invoke, and the other part is a core library of Android. The application layer and the application framework layer run on the ART virtual machine. The ART virtual machine executes java files of the application layer and the application framework layer as binary files. The ART virtual machine is configured to perform functions such as object lifecycle management, stack management, thread management, security and exception management, and garbage collection.

The HAL layer is an interface layer between an operating system kernel and a hardware circuit, and aims to abstract hardware. The HAL layer hides hardware interface details of a particular platform, and provides a virtual hardware platform for an operating system, so that the operating system is hardware-independent and can be migrated on a plurality of platforms. The HAL layer provides a standard interface to display a device hardware function to a higher-level Java API framework (that is, the framework layer). The HAL layer includes a plurality of library modules, and each module implements an interface for a specific type of hardware component, for example, an audio HAL audio module, a Bluetooth HAL Bluetooth module, a camera HAL camera module (which may also be referred to as a camera HAL or camera hardware abstraction module), or a sensors HAL sensor module (or referred to as an Isensor service).

The kernel layer is a layer between hardware and software. The kernel layer includes at least a display driver, a camera driver, an audio driver, a sensor driver, and a battery driver. This is not limited in this application.

All technical solutions provided in embodiments of this application can be implemented in the electronic device having the foregoing hardware structure or software structure.

After the electronic device registers to access a network by using the network-side device and camps on to the serving cell, the electronic device may have two states: an idle state and a connected state. Regardless of the idle state or the connected state, the electronic device may perform neighboring cell measurement. Therefore, the neighboring cell measurement method provided in this application may include a first neighboring cell measurement procedure for the electronic device in the connected state and a first neighboring cell measurement procedure for the electronic device in the idle state.

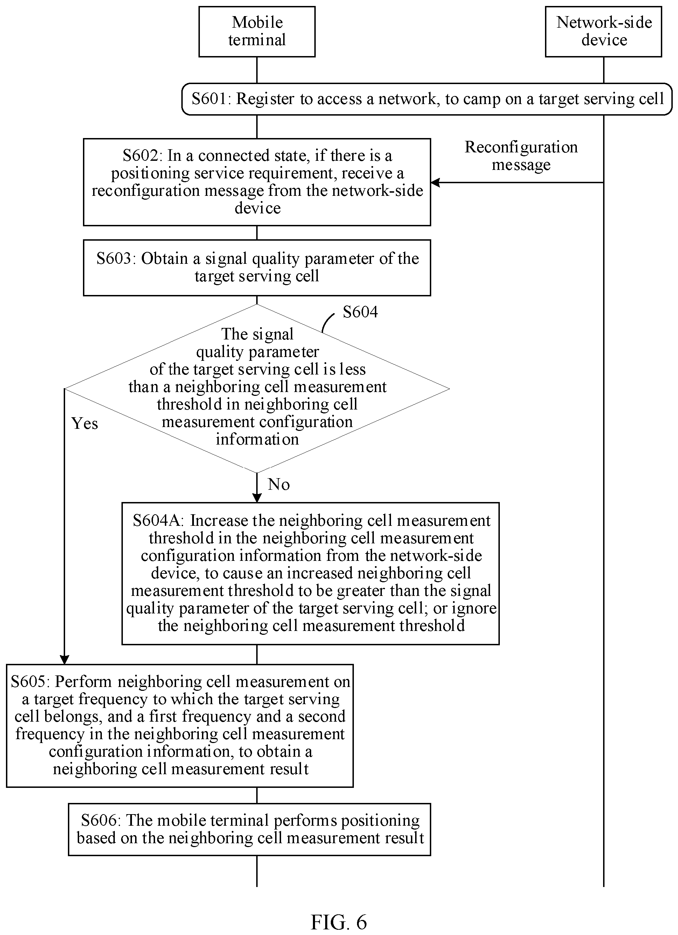

The following describes, with reference to FIG. 6, the first neighboring cell measurement procedure for the electronic device in the connected state in the neighboring cell measurement method provided in this embodiment of this application. FIG. 6 is a schematic flowchart of a first neighboring cell measurement procedure for an electronic device in a connected state in a neighboring cell measurement method according to an embodiment of this application. As shown in FIG. 6, the electronic device is a mobile terminal (for example, a mobile phone), and the first neighboring cell measurement procedure for the electronic device in the connected state may include S601 to S606.

S601: The mobile terminal is powered on, and registers to access a network via a network-side device, to camp on a target serving cell.

The target serving cell is the serving cell on which the mobile terminal currently camps in the foregoing embodiment. The network-side device may be a base station, for example, an LTE base station or an NR base station. The network-side device is configured to manage the target serving cell.

For example, a procedure in which the mobile terminal registers to access the network may include: The terminal is powered on and performs an initialization operation, the mobile terminal establishes an RRC connection with the network-side device to perform radio resource configuration, the mobile terminal requests attachment from the network-side device to complete network attachment, the mobile terminal establishes a default bearer with the network-side device, and the mobile terminal completes tracking area update (tracking area update, TAU) via the network-side device. A specific implementation of registering to access the network may be any feasible manner. This is not specifically limited in this application.

S602: When the mobile terminal is in the connected state, if the mobile terminal has a positioning service requirement, the mobile terminal receives a reconfiguration message from the network-side device.

The reconfiguration message may be specifically an RRC reconfiguration message, and the reconfiguration message may carry neighboring cell measurement configuration information corresponding to the connected state, that is, first neighboring cell measurement configuration information. For example, the first neighboring cell measurement configuration information may include a first measurement threshold of a neighboring cell, at least one first frequency corresponding to an inter-frequency neighboring cell, and at least one second frequency corresponding to an inter-system neighboring cell. The first frequency is different from a target frequency of the target serving cell on which the electronic device currently camps, and a communication standard to which the first frequency belongs is the same as a communication standard to which the target frequency band belongs. In other words, the first frequency corresponds to the inter-frequency neighboring cell. The second frequency is different from the target frequency of the target serving cell on which the electronic device currently camps, and a communication standard to which the first frequency belongs is different from the communication standard to which the target frequency band belongs. In other words, the second frequency corresponds to the inter-system neighboring cell.

The neighboring cell may include an intra-frequency neighboring cell, the inter-frequency neighboring cell, and the inter-system neighboring cell. When the mobile terminal is in the connected state, according to a stipulation of the 3GPP protocol, all neighboring cell measurement thresholds for measuring the intra-frequency neighboring cell, the inter-frequency neighboring cell, and the inter-system neighboring cell are the first measurement threshold. Alternatively, all measurement thresholds for performing neighboring cell measurement on the target frequency to which the target serving cell belongs, the first frequency, and the second frequency are the first measurement threshold.

Generally, after the mobile terminal is powered on and completes registering to access the network, the mobile terminal is in the connected state. In addition, subsequently, when the mobile terminal needs to perform data transmission with the network-side device or make a call to another mobile terminal via the network-side device, the mobile terminal re-establishes or maintains a communication connection corresponding to the connected state.

For example, when the mobile terminal is in the connected state, the communication connection existing between the mobile terminal and the network-side device may include an RRC connection and a radio bearer (radio bearer, RB) connection. The network-side device may send the reconfiguration message (or referred to as an RRC reconfiguration message) to the mobile terminal through the RRC connection.

It should be noted that, before the cell on which the mobile terminal camps is not handed over, the RRC reconfiguration message carrying the neighboring cell measurement configuration information may be sent only once. In other words, in a process in which the mobile terminal camps on a cell, neighboring cell measurement configuration information used during neighboring cell measurement is the same. Only after the cell on which the mobile terminal camps is changed, the network-side device sends, to the mobile terminal, an RRC reconfiguration message carrying new neighboring cell measurement configuration information.

In some embodiments, the positioning requirement may be generated when an application on the mobile terminal provides a function to a user. For example, when the user uses a takeout application installed on the mobile terminal, to present takeout information near a position of the user to the user, the takeout application needs to obtain a position of the mobile terminal. In this case, the mobile terminal has a positioning requirement, and the mobile terminal actively generates a positioning service request.

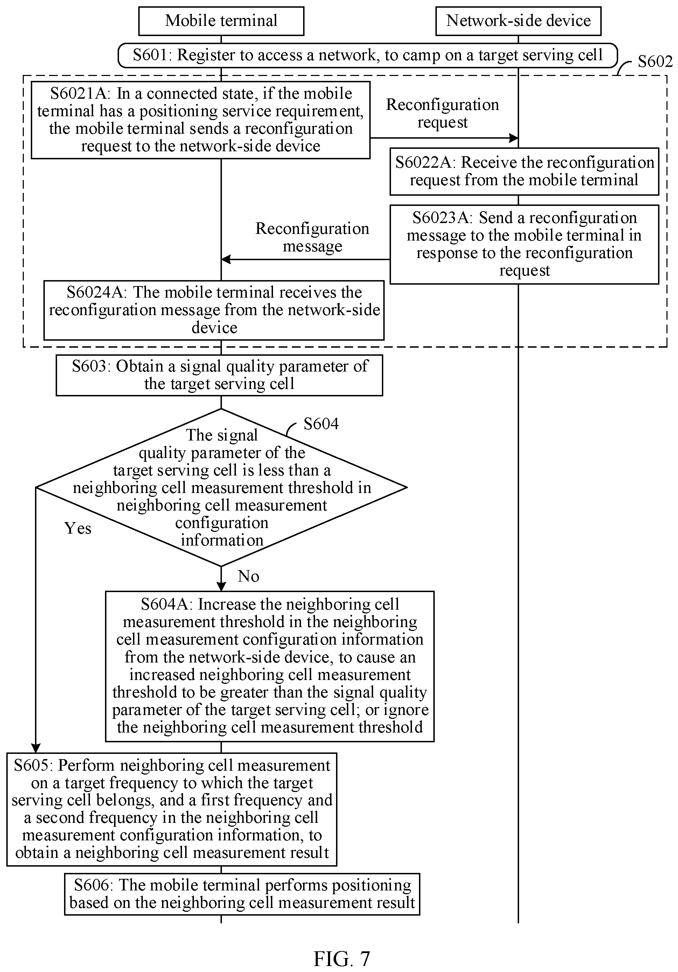

When the mobile terminal actively generates the positioning requirement, the mobile terminal may actively request the first neighboring cell measurement configuration information from the network-side device. After receiving the corresponding request, the network-side device may send the reconfiguration message carrying the first neighboring cell measurement configuration information to the mobile terminal. Based on this, with reference to FIG. 6, as shown in FIG. 7, S602 may specifically include S6021A to S6024A.

S6021A: When the mobile terminal is in the connected state, if the mobile terminal has the positioning requirement, the mobile terminal sends a reconfiguration request to the network-side device.

The reconfiguration request may be an RRC reconfiguration request, and the reconfiguration request is for requesting the neighboring cell measurement configuration information. Certainly, actually, specific request content of the RRC reconfiguration request may further include any other feasible content. The first neighboring cell measurement configuration information is merely a part or all of content of the RRC reconfiguration request in a possible case in this embodiment of this application. This is not specifically limited in this application.

S6022A: The network-side device receives the reconfiguration request from the mobile terminal.

S6023A: The network-side device sends the reconfiguration message to the mobile terminal in response to the reconfiguration request.

The reconfiguration message carries the neighboring cell measurement configuration information corresponding to the connected state, that is, the first neighboring cell measurement configuration information.

Certainly, actually, whether the network-side device responds to the reconfiguration request from the mobile terminal further needs to be determined based on information (such as an identifier of the mobile terminal) of the mobile terminal carried in the reconfiguration request or other possible content. This is not specifically limited in this application.

S6024A: The mobile terminal receives the reconfiguration message from the network-side device.

Based on the technical solution corresponding to S6021A to S6023A, when the mobile terminal actively generates the positioning requirement, the mobile terminal may obtain the first neighboring cell measurement configuration information from the network-side device, to complete neighboring cell measurement, and obtain neighboring cell information as data support for positioning.

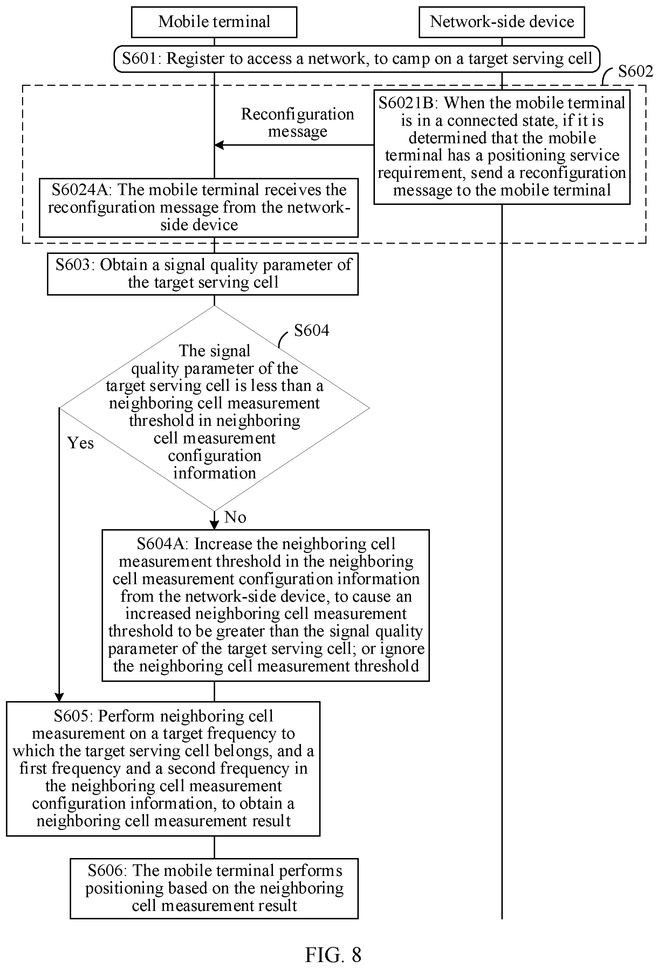

In some other embodiments, the mobile terminal may continuously move, and signal quality of the target serving cell on which the mobile terminal currently camps may also change with an environmental reason. Therefore, to ensure communication stability of the mobile terminal, the network-side device may need to periodically send a reconfiguration message to the mobile terminal, so that the mobile terminal performs neighboring cell measurement and returns a measurement result to the network-side device. Then, the network-side device may determine, based on the neighboring cell measurement result, whether to perform handover on the serving cell on which the mobile terminal camps. In this case, when needing to send the reconfiguration message to the mobile terminal, the network-side device may consider that the mobile terminal has the positioning requirement. In this case, the reconfiguration message may be actively sent by the network-side device to the electronic device. Based on this, with reference to FIG. 6, as shown in FIG. 8, S602 may specifically include S6021B and S6022B.

S6021B: When the mobile terminal is in the connected state, if the network-side device determines that the mobile terminal has the positioning requirement, the network-side device sends the reconfiguration message to the mobile terminal.

The reconfiguration message carries the first neighboring cell measurement configuration information.

Based on the technical solution corresponding to S6021B and S6022B, when the network-side device determines that the mobile terminal has the positioning requirement, the network-side device may send the reconfiguration message carrying the first neighboring cell measurement configuration information to the mobile terminal, so that the mobile terminal may complete neighboring cell measurement based on the first neighboring cell measurement configuration message, and obtain neighboring cell information as data support for positioning.

S6022B: The mobile terminal receives the reconfiguration message from the network-side device.

Based on the technical solution corresponding to S6021A to S6023A, the network-side device may actively send the reconfiguration message to the mobile terminal at any moment of determining that the mobile terminal has the positioning requirement. In this way, the mobile terminal may complete neighboring cell measurement based on the first neighboring cell measurement configuration information in the reconfiguration message, and obtain neighboring cell information as data support for positioning.

After obtaining the first neighboring cell measurement configuration information when the mobile terminal is in the connected state, the mobile terminal may start to determine whether to perform neighboring cell measurement. Specifically, the mobile terminal may determine whether a signal quality parameter of the target serving cell is less than a neighboring cell measurement threshold in the first neighboring cell measurement configuration. In other words, S603 and S604 are performed after S602.

S603: The mobile terminal obtains the signal quality parameter of the target serving cell.

The signal quality parameter may be an RSRP, and may be specifically an RSRP of a downlink signal of the mobile terminal.

Specifically, the mobile terminal may obtain the signal quality parameter of the target serving cell in any feasible manner, for example, directly measure a downlink signal from a base station in the target serving cell.

In addition, it should be noted that the position of the mobile terminal may change at any time, and the signal quality of the target serving cell may also change at any time. Therefore, to ensure that the cell on which the mobile terminal camps is handed over in time when a communication signal of the mobile terminal becomes worse, actually, the mobile terminal may obtain the signal quality parameter of the target serving cell in real time or periodically. In other words, S603 may be performed after S602, may be performed before S602, or may be performed at the same time as S602.

S604: The mobile terminal determines whether the signal quality parameter of the target serving cell is less than the neighboring cell measurement threshold in the neighboring cell measurement configuration information from the network-side device.

The neighboring cell measurement configuration information from the network-side device is the neighboring cell measurement configuration information carried in the reconfiguration message. The neighboring cell measurement configuration information is specifically the first neighboring cell measurement configuration information in the foregoing embodiments. A neighboring cell measurement threshold in the first neighboring cell measurement configuration information may be specifically the first measurement threshold.

For example, the signal quality parameter in this application may be the RSRP, and the first measurement threshold is also a threshold corresponding to the RSRP. Certainly, actually, the signal quality parameter may alternatively be another parameter that can represent signal quality of the cell, for example, RSRQ, a signal to interference plus noise ratio (signal to interference plus noise ratio, SINR), or a received signal strength indication (received signal strength indication, RSSI). In addition, the first measurement threshold may also be correspondingly adjusted, and is specifically determined according to an actual situation. This is not specifically limited in this application. The same applies to subsequent embodiments.

When the signal quality parameter of the target serving cell is less than the neighboring cell measurement threshold in the neighboring cell measurement configuration information from the network-side device, it may be determined, according to existing neighboring cell measurement logic, that the mobile terminal needs to perform neighboring cell measurement, that is, perform S605.

When the signal quality parameter of the target serving cell is greater than the neighboring cell measurement threshold in the neighboring cell measurement configuration information from the network-side device, it may be determined, according to the existing neighboring cell measurement logic, that the mobile terminal does not need to perform neighboring cell measurement currently. However, to cause the mobile terminal to obtain sufficient neighboring cell information, in this case, the mobile terminal needs to be forced to perform neighboring cell measurement, that is, the mobile terminal is forced to perform S605.

In a possible implementation, a manner of forcing the mobile terminal to perform neighboring cell measurement may be ignoring the neighboring cell measurement threshold in the neighboring cell measurement configuration information from the network-side device.

In another possible implementation, the neighboring cell measurement threshold in the neighboring cell measurement configuration information from the network-side device may be further increased in the manner of forcing the mobile terminal to perform neighboring cell measurement, to cause the signal quality parameter of the target serving cell to be less than an increased measurement threshold. In this way, the mobile terminal may perform neighboring cell measurement according to the existing neighboring cell measurement logic.

Based on this, after S604 is performed, when the signal quality parameter of the target serving cell is less than the neighboring cell measurement threshold in the neighboring cell measurement configuration information from the network-side device, as shown in FIG. 6, the mobile terminal may first perform S604A; and perform S605 after S604A.

S604A: The mobile terminal increases the neighboring cell measurement threshold in the neighboring cell measurement configuration information from the network-side device, to cause an increased neighboring cell measurement threshold to be greater than the signal quality parameter of the target serving cell; or ignores the neighboring cell measurement threshold.

The neighboring cell measurement threshold in the neighboring cell measurement configuration information from the network-side device is specifically the first measurement threshold in the first neighboring cell measurement configuration information. After the first measurement threshold is increased to be greater than the signal quality parameter of the target serving cell, the mobile terminal may perform S604 again. In this case, the first measurement threshold has been greater than the signal quality parameter of the target serving cell. Therefore, a determining result of S604 is that the signal quality parameter of the target serving cell is less than the neighboring cell measurement threshold in the neighboring cell measurement configuration information from the network-side device. Then, S605 is performed. Certainly, after the first measurement threshold is increased to be greater than the signal quality parameter of the target serving cell, because it is determined that the first measurement threshold has been greater than the signal quality parameter of the target serving cell, the mobile terminal may directly perform neighboring cell measurement, that is, directly perform S605. In this way, the mobile terminal is forced to perform neighboring cell measurement when the signal quality parameter of the target serving cell is greater than an original neighboring cell measurement threshold.

It should be noted that, a determining step similar to S604 may not exist in an actual first neighboring cell measurement procedure. After S603, the mobile terminal may perform S605 when the signal quality parameter of the target serving cell is less than the neighboring cell measurement threshold in the neighboring cell measurement configuration information from the network-side device. The mobile terminal is forced to perform S604A when the signal quality parameter of the target serving cell is greater than the neighboring cell measurement threshold in the neighboring cell measurement configuration information from the network-side device. Similar content in subsequent embodiments is the same, and details are not described subsequently again.

In addition, a case in which the signal quality parameter of the target serving cell is equal to the neighboring cell measurement threshold in the neighboring cell measurement configuration information from the network-side device may belong to the case in which the signal quality parameter of the target serving cell is less than the neighboring cell measurement threshold in the neighboring cell measurement configuration information from the network-side device, or may belong to the case in which the signal quality parameter of the target serving cell is greater than the neighboring cell measurement threshold in the neighboring cell measurement configuration information from the network-side device. This is not specifically limited in this application. FIG. 6 only uses an exemplary description in which the case in which the signal quality parameter of the target serving cell is equal to the neighboring cell measurement threshold in the neighboring cell measurement configuration information from the network-side device belongs to the case in which the signal quality parameter of the target serving cell is greater than the neighboring cell measurement threshold in the neighboring cell measurement configuration information from the network-side device. Similar content in subsequent embodiments is the same, and details are not described subsequently again.

S605: The mobile terminal performs neighboring cell measurement on the target frequency to which the target serving cell belongs, and the first frequency and the second frequency in the neighboring cell measurement configuration information from the network-side device, to obtain a neighboring cell measurement result.

The neighboring cell measurement result may include neighboring cell information of a plurality of neighboring cells. The plurality of neighboring cells may include an intra-frequency neighboring cell corresponding to the target frequency, an inter-frequency neighboring cell corresponding to the first frequency, and an inter-system neighboring cell corresponding to the second frequency. For example, the neighboring cell information may include any possible content such as a cell ID and a signal quality parameter. The Cell ID (Cell ID) is a unique identifier for identifying a cell, and the cell is a geographical area in a communication network. The cell ID may be for determining the cell to which the mobile device is currently connected, and for identification when the cell is handed over to another cell. The cell ID may have a matching relationship with information such as a position, a frequency, and a channel of the cell. In other words, the information such as the position (for example, latitude and longitude of the central position), the frequency, and the channel of the cell may be smoothly determined based on the cell ID. In this embodiment of this application, the signal quality parameter may be specifically an RSRP of a downlink signal.

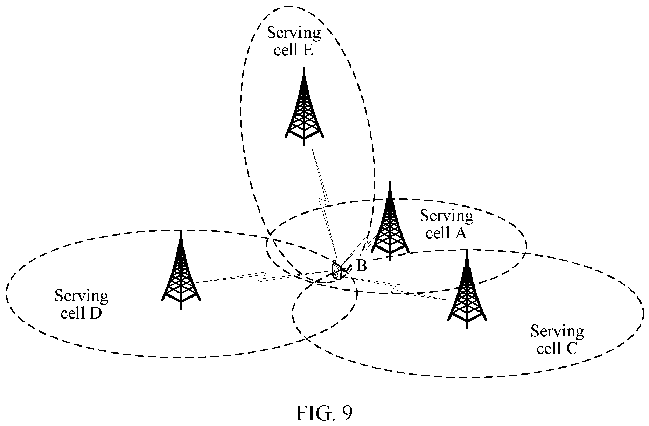

A specific implementation in which the mobile terminal performs neighboring cell measurement on the frequencies may be any feasible implementation. This is not specifically limited in this application. One frequency may actually correspond to a plurality of cells. When the mobile terminal performs neighboring cell measurement on the target frequency, the first frequency, and the second frequency, neighboring cell information of no neighboring cell may be obtained through measurement on a frequency, and neighboring cell information of a plurality of neighboring cells may be obtained through measurement on another frequency. For example, as shown in FIG. 9, when an electronic device B in a target serving cell A performs measurement on a first frequency k, the electronic device B may simultaneously obtain neighboring cell information of an inter-frequency neighboring cell C, an inter-frequency neighboring cell D, and an inter-frequency neighboring cell E through measurement. A frequency to which the inter-frequency neighboring cell C, the inter-frequency neighboring cell D, and the inter-frequency neighboring cell E belong is the first frequency k. Cell IDs and signal quality parameters of the inter-frequency neighboring cell C, the inter-frequency neighboring cell D, and the inter-frequency neighboring cell E are different.

Actually, because quantities of neighboring cells of different target serving cells are uncertain, when the mobile terminal performs forced neighboring cell measurement on the target frequency, the first frequency, and the second frequency, many neighboring cells may be measured. If neighboring cell information of each neighboring cell of each frequency needs to be obtained by measurement, large power consumption is generated, and measurement duration is long. For example, if the target frequency corresponds to two intra-frequency neighboring cells, all first frequencies correspond to five inter-frequency neighboring cells, all second frequencies correspond to five inter-system neighboring cells, and it takes 1s to perform measurement to obtain neighboring cell information of each neighboring cell, total measurement duration of 12s is needed if neighboring cell information of all neighboring cells needs to be obtained through measurement.

Signal quality of the target serving cell may change in the measurement duration, and signal quality of the target serving cell in the 12 neighboring cells may also change. If the service quality of the target serving cell becomes poor at a moment in the measurement duration, and the cell on which the electronic device camps needs to be handed over to a neighboring cell with good signal quality, because measurement on all neighboring cells has not been completed at this moment, signal quality of neighboring cells around the target serving cell at this moment cannot be obtained in time, and the electronic device cannot complete the handover in time. This may cause bad impact such as interruption on a service being performed by the electronic device, seriously degrading use experience of the user.

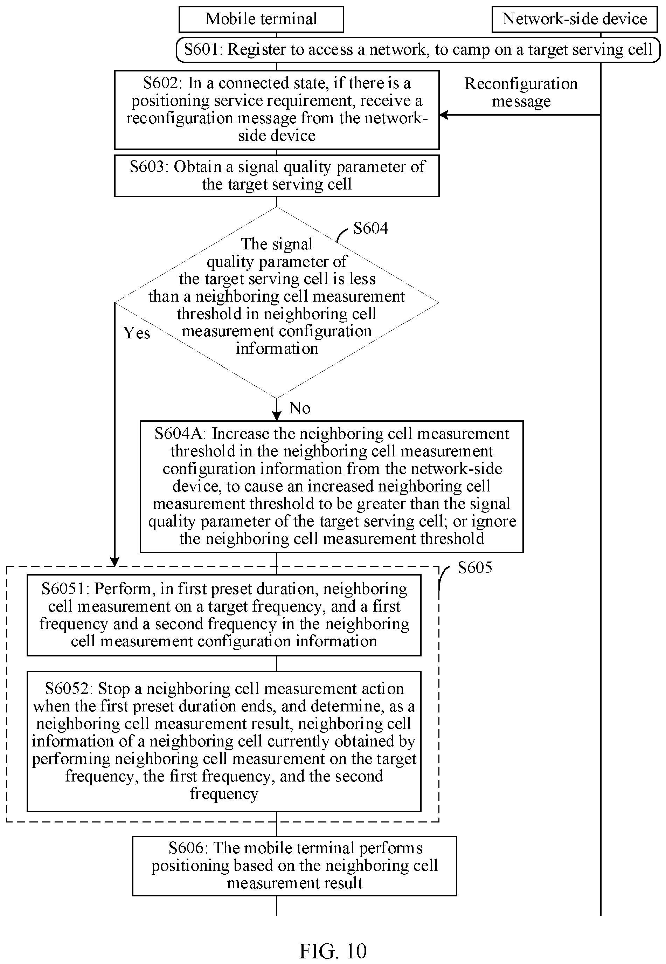

To avoid this defect, entire neighboring cell measurement time needs to be limited, so that time for performing neighboring cell measurement once is not excessively long, thereby avoiding the foregoing problem. Based on this, in some embodiments, with reference to FIG. 6, as shown in FIG. 10, S605 may specifically include S6051 and S6052.

S6051: The mobile terminal performs, in first preset duration, neighboring cell measurement on the target frequency to which the target serving cell belongs, and the first frequency and the second frequency in the neighboring cell measurement configuration information from the network-side device.

For example, in a possible implementation, S6051 may be specifically that the mobile terminal may start a first timer. Timing duration of the first timer is the first preset duration. In a timing process of the first timer, the mobile terminal may perform neighboring cell measurement on the target frequency to which the target serving cell belongs, and the first frequency and the second frequency in the neighboring cell measurement configuration information from the network-side device.

For example, the first preset duration may be 5s. The first preset duration may be obtained by a mobile terminal manufacturer according to experience. A value of the first preset duration is not specifically limited in this application.

S6052: The mobile terminal stops a neighboring cell measurement action when the first preset duration ends, and determines, as the neighboring cell measurement result, neighboring cell information of a neighboring cell currently obtained by performing neighboring cell measurement on the target frequency, the first frequency, and the second frequency.

For example, in a possible implementation, S6052 may be specifically that the mobile terminal stops the neighboring cell measurement action when timing of the first timer ends, and determines, as the neighboring cell measurement result, the neighboring cell information of the neighboring cell currently obtained by performing neighboring cell measurement on the target frequency, the first frequency, and the second frequency.

Based on the technical solution corresponding to S6051 and S6052, the mobile terminal may limit duration that needs to be consumed for neighboring cell measurement, thereby avoiding a problem that a service of the mobile terminal cannot be normally used because the neighboring cell measurement duration is excessively long.

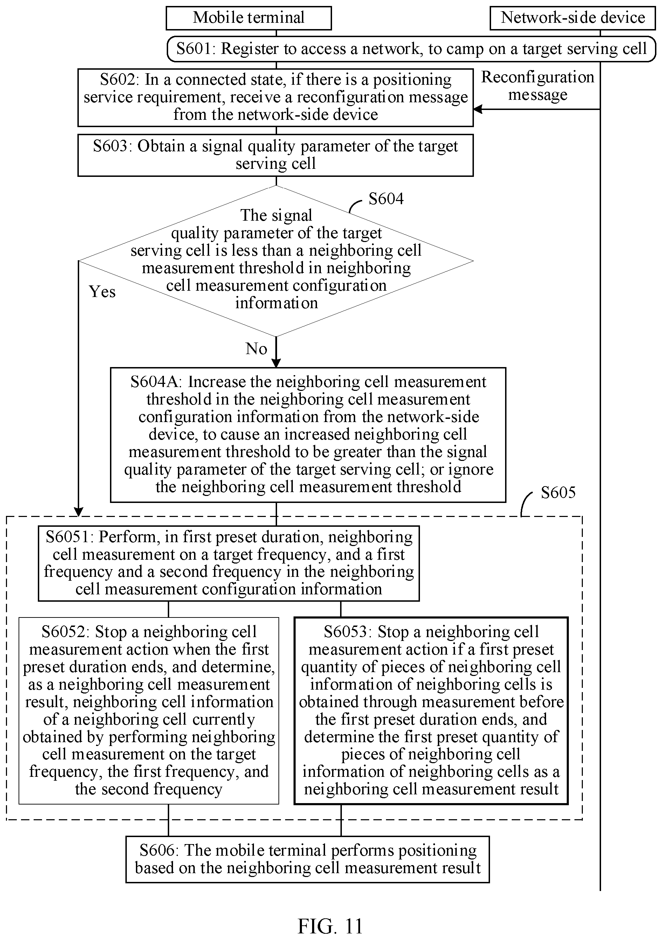

The objective of the neighboring cell measurement in this application is mainly for positioning. However, for positioning based on neighboring cell information, in a process in which a quantity of pieces of neighboring cell information goes from 0 to a first preset quantity, positioning precision may be quickly increased, while in a process in which the quantity of pieces of neighboring cell information continues to be increased from the first preset quantity, the positioning precision changes very little. Therefore, generally, the quantity of pieces of neighboring cell information required for positioning needs only a first preset quantity (or slightly more) of pieces of neighboring cell information based on a precision requirement. If more neighboring cell information is obtained, a change of the positioning precision is not large, and on the contrary, neighboring cell measurement duration becomes long. Based on this, in some embodiments, with reference to FIG. 10, as shown in FIG. 11, S6053 may be included after S6051.

S6053: The mobile terminal stops the neighboring cell measurement action if a first preset quantity of pieces of neighboring cell information of neighboring cells is obtained through measurement before the first preset duration ends, and determines the first preset quantity of pieces of neighboring cell information of neighboring cells as the neighboring cell measurement result.

For example, the first preset quantity may be 5. In this way, the mobile terminal may stop neighboring cell measurement in time after neighboring cell information sufficient for positioning is obtained, to reduce duration consumed for neighboring cell measurement, and reduce power consumption of the mobile terminal, thereby avoiding the problem that the service of the mobile terminal cannot be normally used because the neighboring cell measurement duration is excessively long.

In some embodiments, for intra-frequency neighboring cell measurement, only a signal on a current channel needs to be measured and evaluated, and for inter-frequency neighboring cell measurement, handover and measurement need to be performed on channels of different frequencies. Therefore, during neighboring cell measurement, a measurement speed for an intra-frequency neighboring cell is generally higher than a measurement speed for an inter-frequency neighboring cell. Based on this, in this embodiment of this application, to obtain the first preset quantity of pieces of neighboring cell information more quickly and make neighboring cell measurement duration for positioning shorter, when performing neighboring cell measurement on the target frequency, the first frequency, and the second frequency, the mobile terminal first performs neighboring cell measurement on the target frequency, and then performs neighboring cell measurement on the first frequency and the second frequency. In this way, the mobile terminal may obtain the first preset quantity of pieces of neighboring cell information more quickly, so that an entire neighboring cell measurement process ends more quickly, to reduce duration consumed for neighboring cell measurement, and reduce power consumption of the mobile terminal, thereby avoiding the problem that the service of the mobile terminal cannot be normally used because the neighboring cell measurement duration is excessively long.

S606: The mobile terminal performs positioning based on the neighboring cell measurement result.

The positioning method in which the mobile terminal performs positioning based on the neighboring cell measurement result may be any feasible manner, and may be specifically determined based on the neighboring cell information of the neighboring cell in the neighboring cell measurement result. This is not specifically limited in this application. For example, the positioning method may be a time difference of arrival (time of arrival, TOA) positioning method, an angle of arrival (angle of arrival, AOA) positioning method, a signal strength (or referred to as a signal quality parameter)-based positioning method, or the like. The signal strength-based positioning method may be a trilateral positioning method, a variable positioning method, a fingerprint positioning method, or the like.

For example, by using an example in which neighboring cell information includes a cell ID and a signal quality parameter, a process of the fingerprint positioning method in the signal strength-based positioning method may specifically include the following steps:

Data collection: In each area that needs to be positioned, some key points (such as an intersection and a landmark building) are selected as reference points, and signal quality parameters from surrounding serving cells are measured at the reference points. The measurement data forms a fingerprint database. The data collection stage may be performed before the first neighboring cell measurement procedure provided in this embodiment of this application.

Positioning stage: When a mobile terminal needs to be positioned, the mobile terminal may obtain a position of a neighboring cell based on a cell ID in neighboring cell information of a plurality of neighboring cells obtained through neighboring cell measurement, and compare, with data in the fingerprint database, the position of the neighboring cell and a signal quality parameter in the neighboring cell information.

Position estimation: A position of a key point corresponding to fingerprint data most matching the position of the neighboring cell and the signal quality parameter in the neighboring cell information in a comparison result is used as an estimated position of a user terminal.

The positioning stage and the position estimation may be considered as a specific implementation of S606. A specific positioning method used in S606 for positioning is not specifically limited in this application.

Based on the technical solution corresponding to S601 to S606, for the mobile terminal in the connected state, when the signal quality of the serving cell on which the mobile terminal camps is good, the mobile terminal may be forced to perform complete neighboring cell measurement, to obtain neighboring cell information sufficient for positioning. Then, the mobile terminal may also complete positioning based on the sufficient neighboring cell information, so that a positioning requirement of the mobile terminal is met. In this way, a function having the positioning requirement in the mobile terminal may better provide a service to the user, thereby improving the use experience of the user.

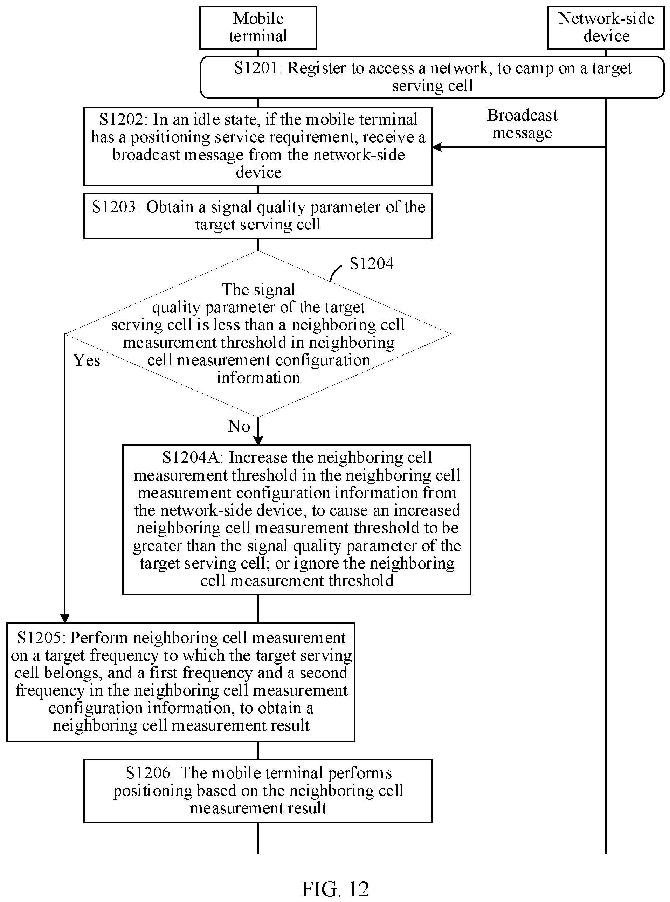

The following describes, with reference to FIG. 12, the second neighboring cell measurement procedure for the electronic device in the idle state in the neighboring cell measurement method provided in this embodiment of this application. FIG. 12 is a schematic flowchart of a second neighboring cell measurement procedure for an electronic device in an idle state in a neighboring cell measurement method according to an embodiment of this application. As shown in FIG. 12, the electronic device is a mobile terminal, and the second neighboring cell measurement procedure for the electronic device in the idle state may include S1201 to S1206.

S1201: The mobile terminal is powered on, and registers to access a network via a network-side device, to camp on a target serving cell.

For a specific implementation of S1201, refer to related descriptions of S601 in the foregoing embodiment. Details are not described herein again.

S1202: When the mobile terminal is in the idle state, if the mobile terminal has a positioning requirement, the mobile terminal receives a broadcast message from the network-side device.

The broadcast message carries neighboring cell measurement configuration information corresponding to the idle state, that is, second neighboring cell measurement configuration information. For example, the second neighboring cell measurement configuration information may include a second measurement threshold of an intra-frequency neighboring cell, a third measurement threshold of an inter-frequency neighboring cell and an inter-system neighboring cell, at least one first frequency corresponding to the inter-frequency neighboring cell, and at least one second frequency corresponding to the inter-system neighboring cell. When the mobile terminal is in the idle state, according to a stipulation of the 3GPP protocol, a neighboring cell measurement threshold for measuring the intra-frequency neighboring cell is the second measurement threshold, and neighboring cell measurement thresholds for measuring the inter-frequency neighboring cell and the inter-system neighboring cell are the third measurement threshold. Alternatively, a measurement threshold for performing neighboring cell measurement on a target frequency to which the target serving cell belongs is the second measurement threshold, and measurement thresholds for performing neighboring cell measurement on the first frequency and the second frequency are the third measurement threshold.

The second neighboring cell measurement configuration information carried in the broadcast message may be specifically included in a plurality of SIBs in the broadcast message. For content of which SIBs include the second neighboring cell measurement configuration information, refer to related descriptions of SIBs in the foregoing embodiment. Details are not described herein again.

Generally, after the mobile terminal is powered on and completes registering to access the network, the mobile terminal is in a connected state. In some particular cases, the mobile terminal may convert from the connected state to the idle state. For example, the particular cases may include: The mobile terminal does not have a new communication requirement after completing communication (a call or data transmission) once, a cell on which the mobile terminal camps is handed over, the network-side device indicates the mobile terminal to enter the idle state when network optimization or resource allocation needs to be performed, an abnormality (for example, a signal loss or signal interference) occurs in a connection (for example, an RRC connection or an air interface connection) between the mobile terminal and the network-side device, and the like.

After the mobile terminal converts from the connected state to the idle state, a communication connection between the mobile terminal and the network may include a broadcast channel, a paging channel (paging channel, PCH), and a random access channel (random access channel, RACH). The network-side device may periodically send, on the broadcast channel, the broadcast message to all electronic devices that register to access the network via the network-side device and that are in coverage of serving cells managed by the network-side device. In the electronic devices that receive the broadcast message, an electronic device in the idle state performs neighboring cell measurement based on the second neighboring cell measurement configuration information in the broadcast message.

It should be noted that, before the cell on which the mobile terminal camps is not handed over, the broadcast message carrying the neighboring cell measurement configuration information may be sent only once. In other words, in a process in which the mobile terminal camps on a cell, neighboring cell measurement configuration information used during neighboring cell measurement is the same. Only after the cell on which the mobile terminal camps is changed, the network-side device sends, to the mobile terminal, a broadcast message carrying new neighboring cell measurement configuration information.

In the second neighboring cell measurement procedure, a positioning service request of the mobile terminal may be actively generated by the mobile terminal. When determining that there is the positioning service request, the mobile terminal may perform neighboring cell measurement based on the neighboring cell measurement configuration information in the broadcast message from the network-side device.

After obtaining the second neighboring cell measurement configuration information when the mobile terminal is in the idle state, the mobile terminal may start to determine whether to perform neighboring cell measurement. Specifically, the mobile terminal may determine whether a signal quality parameter of the target serving cell is less than a neighboring cell measurement threshold in the first neighboring cell measurement configuration. In other words, S1203 and S1204 are performed after S1202.

S1203: The mobile terminal obtains the signal quality parameter of the target serving cell.

The signal quality parameter may be an RSRP, and may be specifically an RSRP of a downlink signal of the mobile terminal.

For a specific implementation of S1203, refer to related descriptions of S603 in the foregoing embodiment. Details are not described herein again.

S1204: The mobile terminal determines whether the signal quality parameter of the target serving cell is less than the neighboring cell measurement threshold in the neighboring cell measurement configuration information from the network-side device. The neighboring cell measurement configuration information from the network-side device is the neighboring cell measurement configuration information carried in the broadcast message. The neighboring cell measurement configuration information is specifically the second neighboring cell measurement configuration information in the foregoing embodiments. A neighboring cell measurement threshold in the second neighboring cell measurement configuration information may specifically include the second measurement threshold and the third measurement threshold. In this embodiment of this application, determining whether the signal quality parameter of the target serving cell is less than the neighboring cell measurement threshold in the neighboring cell measurement configuration information carried in the broadcast message is specifically determining whether the signal quality parameter of the target serving cell is less than both second measurement threshold and the third measurement threshold.

For example, the signal quality parameter in this application may be the RSRP, and the second measurement threshold and the third measurement threshold are also thresholds corresponding to the RSRP. Certainly, actually, the signal quality parameter may alternatively be another parameter that can represent signal quality of the cell, for example, RSRQ, an SINR, or an RSSI. In addition, the second measurement threshold and the third measurement threshold may also be correspondingly adjusted, and are specifically determined according to an actual situation. This is not specifically limited in this application. The same applies to subsequent embodiments.

In the embodiment corresponding to FIG. 12, when both the second measurement threshold and the third measurement threshold are greater than the signal quality parameter of the target serving cell, it may be considered that when the signal quality parameter of the target serving cell is less than the neighboring cell measurement threshold in the neighboring cell measurement configuration information from the network-side device, it may be determined, according to existing neighboring cell measurement logic, that the mobile terminal needs to perform neighboring cell measurement, that is, perform S1205.

In the embodiment corresponding to FIG. 12, when both the second measurement threshold and the third measurement threshold are equal to the signal quality parameter of the target serving cell, it may be considered that the signal quality parameter of the target serving cell is equal to the neighboring cell measurement threshold in the neighboring cell measurement configuration information from the network-side device.

In the embodiment corresponding to FIG. 12, when both the second measurement threshold and the third measurement threshold are less than the signal quality parameter of the target serving cell, it may be considered that when the signal quality parameter of the target serving cell is greater than the neighboring cell measurement threshold in the neighboring cell measurement configuration information from the network-side device, it may be determined, according to the existing neighboring cell measurement logic, that the mobile terminal cannot perform neighboring cell measurement currently. In this way, the mobile terminal cannot obtain sufficient neighboring cell information, and therefore cannot perform precise positioning. To cause the mobile terminal to obtain sufficient neighboring cell information, in this case, the mobile terminal needs to be forced to perform measurement on all neighboring cells, that is, the mobile terminal is forced to perform S1205.

In a possible implementation, a manner of forcing the mobile terminal to perform neighboring cell measurement may be ignoring the neighboring cell measurement threshold in the neighboring cell measurement configuration information from the network-side device. In this implementation, after S1204 is performed, when the signal quality parameter of the target serving cell is greater than the neighboring cell measurement threshold in the neighboring cell measurement configuration information from the network-side device, as shown in FIG. 12, the mobile terminal may be directly forced to perform S1205.

In another possible implementation, the neighboring cell measurement threshold in the neighboring cell measurement configuration information from the network-side device may be further increased in the manner of forcing the mobile terminal to perform neighboring cell measurement, to cause the signal quality parameter of the target serving cell to be less than a new measurement threshold. In this way, the mobile terminal may perform neighboring cell measurement according to the existing neighboring cell measurement logic. In this implementation, after S1204 is performed, when the signal quality parameter of the target serving cell is greater than the neighboring cell measurement threshold in the neighboring cell measurement configuration information from the network-side device, as shown in FIG. 11, S1204A may be first performed; and S1205 is performed after S1204A.

S1204A: The mobile terminal increases the neighboring cell measurement threshold in the neighboring cell measurement configuration information from the network-side device, to cause an increased neighboring cell measurement threshold to be greater than the signal quality parameter of the target serving cell; or ignores the neighboring cell measurement threshold.

The neighboring cell measurement threshold in the neighboring cell measurement configuration information from the network-side device is specifically the second measurement threshold and the third measurement threshold in the second neighboring cell measurement configuration information. Increasing the neighboring cell measurement threshold in the neighboring cell measurement configuration information from the network-side device may be specifically increasing both the second measurement threshold and the third measurement threshold. That the increased neighboring cell measurement threshold is greater than the signal quality parameter of the target serving cell may be specifically that both an increased second measurement threshold and an increased third measurement threshold are greater than the signal quality parameter of the target serving cell.

After both the second measurement threshold and the third measurement threshold are increased to be greater than the signal quality parameter of the target serving cell, the mobile terminal may perform S1204 again. In this case, both the second measurement threshold and the third measurement threshold are greater than the signal quality parameter of the target serving cell. Therefore, a determining result of S1204 is that the signal quality parameter of the target serving cell is less than the neighboring cell measurement threshold in the neighboring cell measurement configuration information from the network-side device. Then, S1205 is performed. Certainly, after both the second measurement threshold and the third measurement threshold are increased to be greater than the signal quality parameter of the target serving cell, because it is determined that both the second measurement threshold and the third measurement threshold have been greater than the signal quality parameter of the target serving cell, the mobile terminal may directly perform neighboring cell measurement, that is, directly perform S1205. In this way, the mobile terminal performs forced neighboring cell measurement when the signal quality of the target serving cell is less than an original measurement threshold.

It should be noted that, a determining step similar to S1204 may not exist in an actual second neighboring cell measurement procedure. After S1203, the mobile terminal may perform S1205 when the signal quality parameter of the target serving cell is less than the neighboring cell measurement threshold in the neighboring cell measurement configuration information from the network-side device. The mobile terminal is forced to perform S1204A when the signal quality parameter of the target serving cell is greater than the neighboring cell measurement threshold in the neighboring cell measurement configuration information from the network-side device.

S1205: The mobile terminal performs neighboring cell measurement on the target frequency to which the target serving cell belongs, and the first frequency and the second frequency in the neighboring cell measurement configuration information from the network-side device, to obtain a neighboring cell measurement result.

The neighboring cell measurement configuration information from the network-side device may be specifically the second neighboring cell measurement configuration information carried in the broadcast message.

For a specific implementation of S1205, refer to related descriptions of S605 in the foregoing embodiment. Details are not described herein again.

In some embodiments, to avoid that neighboring cell measurement duration is excessively long, for a specific implementation of S1205, refer to the related descriptions of FIG. 10 in the foregoing embodiment. Details are not described herein again.

In some embodiments, the second neighboring cell measurement configuration information may further include a priority of the target frequency, a frequency priority of each first frequency, and a frequency priority of each second frequency. In some possible implementations, a frequency with a higher priority may correspond to more serving cells. Based on this, to ensure that the mobile terminal can obtain neighboring cell information of more neighboring cells more quickly when performing neighboring cell measurement, S1205 may specifically include: The mobile terminal sequentially performs neighboring cell measurement on the target frequency, the first frequency, and the second frequency in descending order of the priorities of the target frequency, all first frequencies, and all second frequencies, to obtain the neighboring cell measurement result. Certainly, the setting of an actual frequency priority may also be related to any other possible content. For example, if a frequency corresponds to fewer electronic devices, the frequency has a higher frequency priority. In this case, if neighboring cell measurement is performed in descending order of the priorities, loads of different frequencies may be more balanced, to improve stability of an entire communication network, thereby ensuring use experience of a user.

S1206: The mobile terminal performs positioning based on the neighboring cell measurement result.

For a specific implementation of S1206, refer to related implementations of S606 in the foregoing embodiment. Details are not described herein again.

Based on the technical solution corresponding to S1201 to S1206, for the mobile terminal in the idle state, when the signal quality of the serving cell on which the mobile terminal camps is good, the mobile terminal may be forced to perform complete neighboring cell measurement, to obtain neighboring cell information sufficient for positioning. Then, the mobile terminal may also complete positioning based on the sufficient neighboring cell information, so that a positioning requirement of the mobile terminal is met. In this way, a function having the positioning requirement in the mobile terminal may better provide a service to the user, thereby improving the use experience of the user.

In some embodiments, for the electronic device in the idle state, when both the second measurement threshold and the third measurement threshold are greater than the signal quality parameter of the target serving cell on which the electronic device currently camps, except for, in the instance shown in FIG. 12, the manner of ignoring the second measurement threshold and the third measurement threshold, or the manner of completing forced neighboring cell measurement on all frequencies (the target frequency, the first frequency, and the second frequency), for example, increasing the second measurement threshold and the third measurement threshold to cause both the second measurement threshold and the third measurement threshold to be greater than the signal quality parameter of the target serving cell, the electronic device may perform neighboring cell measurement on only some frequencies based on a requirement that only a first preset quantity of pieces of neighboring cell information needs to be obtained for positioning and a requirement that neighboring cell measurement duration is reduced as much as possible to avoid an adverse effect on normal use of the electronic device. When a quantity of pieces of neighboring cell information obtained by performing neighboring cell measurement on the some frequencies reaches the first preset quantity, the electronic device may not perform neighboring cell measurement on the other frequencies. When the quantity of pieces of neighboring cell information obtained by performing neighboring cell measurement on the some frequencies is less than the first preset quantity, neighboring cell measurement is performed on the other frequencies.

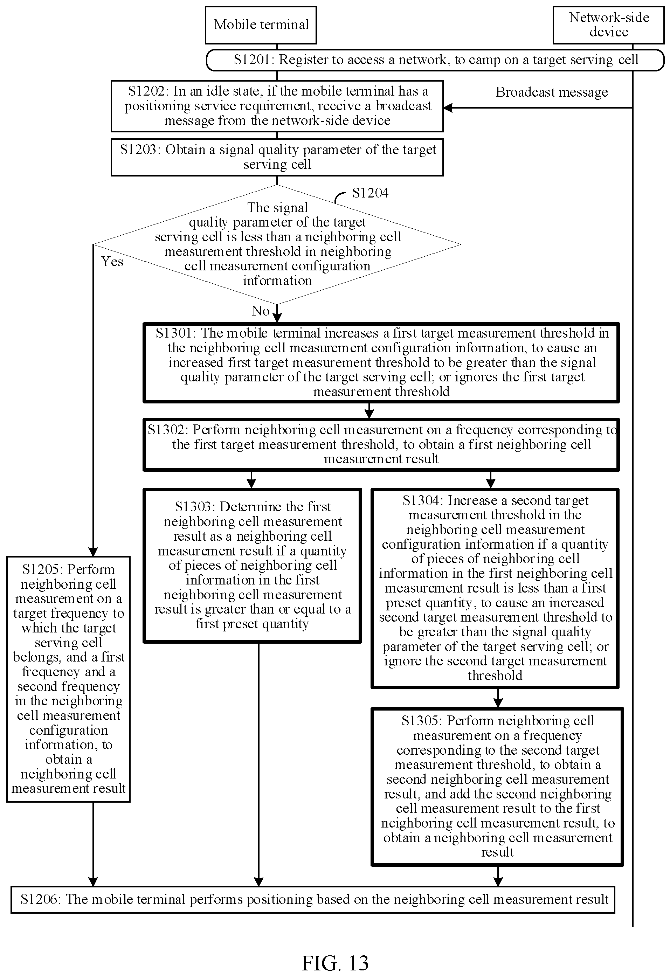

Based on this, with reference to FIG. 12, as shown in FIG. 13, after S1204, when it is determined that the signal quality parameter of the target serving cell is greater than the neighboring cell measurement threshold in the neighboring cell measurement configuration information from the network-side device, the method may further include S1301 to S1305.

S1301: The mobile terminal increases a first target measurement threshold in the neighboring cell measurement configuration information, to cause an increased first target measurement threshold to be greater than the signal quality parameter of the target serving cell; or ignores the first target measurement threshold.

The first target measurement threshold may be the second measurement threshold or the third measurement threshold.

S1302: The mobile terminal performs neighboring cell measurement on a frequency corresponding to the first target measurement threshold, to obtain a first neighboring cell measurement result.

If the first target measurement threshold is the second measurement threshold, the frequency corresponding to the first target measurement threshold is the target frequency. If the first target measurement threshold is the third measurement threshold, the frequency corresponding to the first target measurement threshold is the first frequency and the second frequency.

A specific implementation in which the mobile terminal performs neighboring cell measurement on the frequency corresponding to the first target measurement threshold may be any feasible implementation. This is not specifically limited in this application.

When the second neighboring cell measurement configuration information includes the priority of the target frequency, the frequency priority of each first frequency, and the frequency priority of each second frequency, S1302 may be specifically: The mobile terminal sequentially performs neighboring cell measurement on frequencies corresponding to the first target measurement threshold in descending order of priorities of the frequencies corresponding to the first target measurement threshold.

In addition, to avoid unfavorable application of excessively long neighboring cell measurement duration on normal use of the user terminal, when 1302 is performed, it further needs to be ensured that duration for which neighboring cell measurement is performed on the frequency corresponding to the first target measurement threshold is not excessively long. For example, the mobile terminal may stop a neighboring cell measurement action when the duration for which neighboring cell measurement is performed on the frequency corresponding to the first target measurement threshold reaches first target duration, and determine, as the neighboring cell measurement result, neighboring cell information currently obtained by performing neighboring cell measurement on the frequency corresponding to the first target measurement threshold. The first target duration may be determined based on an actual requirement.

S1303 or S1304 is performed after S1302, and is specifically determined based on a quantity of pieces of neighboring cell information obtained by performing neighboring cell measurement on the frequency corresponding to the first target measurement threshold.

S1303: The mobile terminal determines the first neighboring cell measurement result as the neighboring cell measurement result if the quantity of pieces of neighboring cell information in the first neighboring cell measurement result is greater than or equal to the first preset quantity.

Because positioning meeting a requirement can be completed based on only the first preset quantity (or slightly more) of pieces of neighboring cell information, if the quantity of pieces of neighboring cell information obtained by performing neighboring cell measurement on the frequency corresponding to the first target measurement threshold has reached the first preset quantity, the entire neighboring cell measurement procedure may be ended, that is, the neighboring cell information obtained by performing neighboring cell measurement on the frequency corresponding to the first target measurement threshold is determined as the neighboring cell measurement result.

S1206 is performed after S1303.

S1304: The mobile terminal increases a second target measurement threshold in the neighboring cell measurement configuration information if the quantity of pieces of neighboring cell information in the first neighboring cell measurement result is less than the first preset quantity, to cause an increased second target measurement threshold to be greater than the signal quality parameter of the target serving cell; or ignores the second target measurement threshold.

The second measurement threshold is the other one of the second measurement threshold and the third measurement threshold that is other than the first target measurement threshold. Specifically, if the first target measurement threshold is the second measurement threshold, the second target measurement threshold is the third measurement threshold. If the first target measurement threshold is the third measurement threshold, the second target measurement threshold is the second measurement threshold.

S1305: The mobile terminal performs neighboring cell measurement on a frequency corresponding to the second target measurement threshold, to obtain a second neighboring cell measurement result, and adds the second neighboring cell measurement result to the first neighboring cell measurement result, to obtain the neighboring cell measurement result.

If the second target measurement threshold is the second measurement threshold, the frequency corresponding to the second target measurement threshold includes the target frequency. If the second target measurement threshold is the third measurement threshold, the frequency corresponding to the second target measurement threshold includes the first frequency and the second frequency. The second neighboring cell measurement result is added to the neighboring cell measurement result obtained based on the first neighboring cell measurement result, so that all neighboring cell information in the first neighboring cell measurement result and the second neighboring cell measurement result is included.

When the second neighboring cell measurement configuration information includes the priority of the target frequency, the frequency priority of each first frequency, and the frequency priority of each second frequency, S1305 may be specifically: The mobile terminal sequentially performs neighboring cell measurement on frequencies corresponding to the second target measurement threshold in descending order of priorities of the frequencies corresponding to the second target measurement threshold, to obtain the second neighboring cell measurement result, and adds the second neighboring cell measurement result to the first neighboring cell measurement result, to obtain the neighboring cell measurement result.

In addition, to avoid unfavorable application of excessively long neighboring cell measurement duration on normal use of the user terminal, when 1305 is performed, it further needs to be ensured that total duration for which neighboring cell measurement is performed on the frequency corresponding to the second target measurement threshold is not excessively long. For example, the mobile terminal may stop the neighboring cell measurement action when total duration for which neighboring cell measurement is performed on the frequency corresponding to the first target measurement threshold and the frequency corresponding to the second target measurement threshold reaches second target duration, and determine, as the neighboring cell measurement result, neighboring cell information currently obtained by performing neighboring cell measurement on the frequency corresponding to the first target measurement threshold and the frequency corresponding to the second target measurement threshold. The second target duration may be determined based on an actual requirement.

Further, the positioning requirement can be met provided that the quantity of pieces of neighboring cell information reaches the first preset quantity. Therefore, before the duration for which the mobile terminal performs neighboring cell measurement on the frequency corresponding to the second target measurement threshold reaches the second target duration, if a sum of the quantity of pieces of neighboring cell information in the first neighboring cell measurement result and a quantity of pieces of neighboring cell information obtained by performing neighboring cell measurement on the frequency corresponding to the second target measurement threshold reaches the first preset quantity, the mobile terminal may stop the neighboring cell measurement action, and determine the first preset quantity of pieces of neighboring cell information as the neighboring cell measurement result.

In some embodiments, for intra-frequency neighboring cell measurement, only a signal on a current channel needs to be measured and evaluated, and for inter-frequency neighboring cell measurement, handover and measurement need to be performed on channels of different frequencies. Therefore, during neighboring cell measurement, a measurement speed for an intra-frequency neighboring cell is generally higher than a measurement speed for an inter-frequency neighboring cell. Based on this, in this embodiment of this application, to obtain the first preset quantity of pieces of neighboring cell information more quickly and make neighboring cell measurement duration for positioning shorter, the first target measurement threshold herein may be the second measurement threshold, and the second target measurement threshold may be the third measurement threshold. In this way, the mobile terminal may preferentially perform measurement on an intra-frequency neighboring cell corresponding to the target frequency, to obtain the first preset quantity of pieces of neighboring cell information more quickly.

S1206 is performed after S1305.

Based on the technical solution corresponding to S1301 to S1305, when the mobile terminal is in the idle state and the signal instruction of the target serving cell currently camped on is good, when the mobile terminal can obtain sufficient neighboring cell information by performing neighboring cell measurement on only some frequencies, the mobile terminal may perform neighboring cell measurement on only the some frequencies. This reduces time consumption and power consumption of entire neighboring cell measurement while ensuring subsequent positioning precision, thereby avoiding a problem that the mobile terminal cannot be normally used because a neighboring cell measurement user is excessively long. When the mobile terminal cannot obtain sufficient neighboring cell information by performing neighboring cell measurement on only some frequencies, the mobile terminal may perform neighboring cell measurement on all frequencies, to ensure that the sufficient neighboring cell information is obtained, so that the mobile terminal can subsequently perform complete and sufficiently precise positioning, thereby improving the use experience of the user. In conclusion, based on the foregoing technical solution, when the mobile terminal is in the idle state and the signal instruction of the cell currently camped on is good, the mobile terminal may obtain the sufficient neighboring cell information by using a proper forced measurement means, to meet the positioning requirement of the mobile terminal.

In some embodiments, for the electronic device in the idle state, except for the two cases in which both the second measurement threshold and the third measurement threshold in the second neighboring cell measurement configuration information are less than the signal quality parameter of the target serving cell on which the electronic device currently camps, and both the second measurement threshold and the third measurement threshold are greater than the signal quality parameter of the target serving cell on which the electronic device currently camps, if the second measurement threshold and the third measurement threshold are different, the signal quality parameter of the target serving cell on which the electronic device currently camps may be between the second measurement threshold and the third measurement threshold. Specifically, if the second measurement threshold is greater than the third measurement threshold, that the signal quality parameter of the target serving cell is between the second measurement threshold and the third measurement threshold means that the signal quality parameter of the target serving cell is greater than the second measurement threshold and less than the third measurement threshold. If the second measurement threshold is less than the third measurement threshold, that the signal quality parameter of the target serving cell is between the second measurement threshold and the third measurement threshold means that the signal quality parameter of the target serving cell is greater than the third measurement threshold and less than the second measurement threshold.

In this case, based on the requirement that only the first preset quantity of pieces of neighboring cell information needs to be obtained for positioning and the requirement that neighboring cell measurement duration is reduced as much as possible to avoid the adverse effect on normal use of the electronic device, the electronic device may first perform neighboring cell measurement on a frequency corresponding to the third target measurement threshold greater than the signal quality parameter of the target serving cell. When a quantity of pieces of neighboring cell information obtained by performing neighboring cell measurement on the frequency corresponding to the third target measurement threshold reaches the first preset quantity, forced neighboring cell measurement is not performed on a frequency corresponding to a fourth target measurement threshold less than the signal quality parameter of the target serving cell. When the quantity of pieces of neighboring cell information obtained by performing neighboring cell measurement on the frequency corresponding to the third target measurement threshold is less than the first preset quantity, forced neighboring cell measurement is performed on the frequency corresponding to the fourth target measurement threshold.

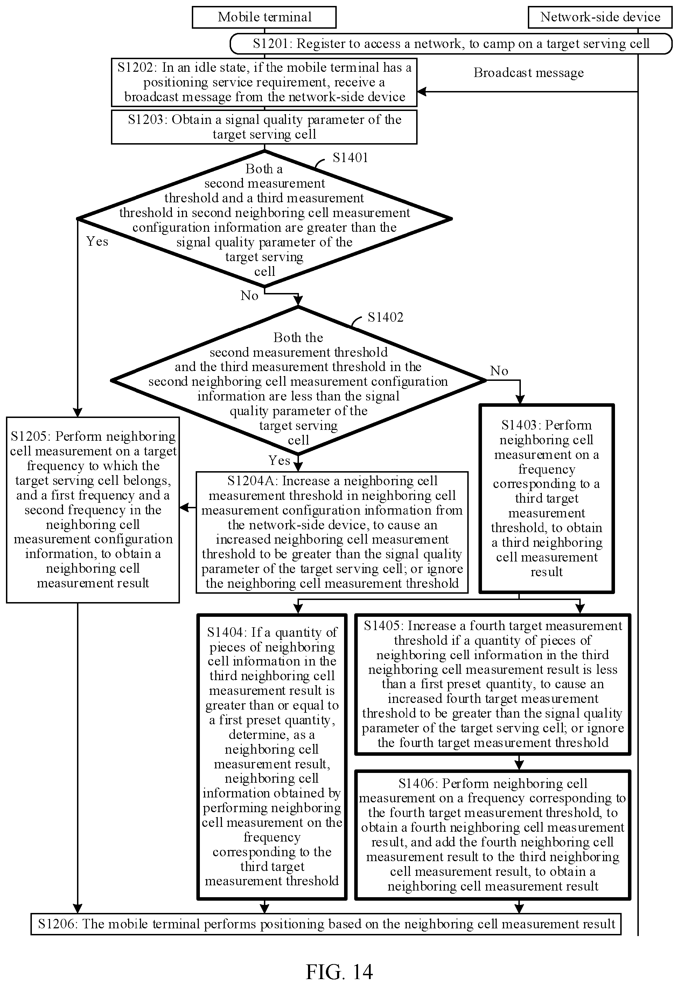

Based on this, with reference to FIG. 12, as shown in FIG. 14, S1204 may be specifically replaced with S1401, and the method may further include S1402 to S1406.

S1401: The mobile terminal determines whether both the second measurement threshold and the third measurement threshold in second neighboring cell measurement configuration information are greater than the signal quality parameter of the target serving cell.

When both the second measurement threshold and the third measurement threshold in the second neighboring cell measurement configuration information are greater than the signal quality parameter of the target serving cell, S1205 is performed. When the second measurement threshold and the third measurement threshold in the second neighboring cell measurement configuration information are not both greater than the signal quality parameter of the target serving cell, S1402 is performed.

It should be noted that, a determining step similar to S1401 may not exist in an actual second neighboring cell measurement procedure. After S1203, the mobile terminal may perform S1205 when both the second measurement threshold and the third measurement threshold in the second neighboring cell measurement configuration information are greater than the signal quality parameter of the target serving cell, or perform S1402 when the second measurement threshold and the third measurement threshold in the second neighboring cell measurement configuration information are not both greater than the signal quality parameter of the target serving cell.

S1402: The mobile terminal determines whether both the second measurement threshold and the third measurement threshold in second neighboring cell measurement configuration information are less than the signal quality parameter of the target serving cell.

When both the second measurement threshold and the third measurement threshold in the second neighboring cell measurement configuration information are less than the signal quality parameter of the target serving cell, it may be determined that the signal quality parameter of the target serving cell is greater than the neighboring cell measurement threshold in the neighboring cell measurement configuration information from the network-side device, and in this case, neighboring cell measurement cannot be performed according to existing logic. In this case, the mobile terminal may be forced to perform neighboring cell measurement, that is, perform S1206 after performing S1204A. Certainly, in this case, to reduce neighboring cell measurement duration as much as possible, S1301 to S1305 may also be performed. This is not specifically limited in this application. In FIG. 14, only an example in which S1206 is performed after S1204A is performed is used for description, and this is not used as a limitation to the technical solutions provided in this application.

When the second measurement threshold and the third measurement threshold in the second neighboring cell measurement configuration information are not both less than the signal quality parameter of the target serving cell, it may be determined that the signal quality parameter of the target serving cell is between the second measurement threshold and the third measurement threshold. In this case, neighboring cell measurement may be first performed on a frequency corresponding to the third target measurement threshold, that is, S1403 is performed.

S1403: The mobile terminal performs neighboring cell measurement on the frequency corresponding to the third target measurement threshold, to obtain a third neighboring cell measurement result.

The third target measurement threshold may be one of the second measurement threshold and the third measurement threshold that is greater than the signal quality parameter of the target serving cell. If the third target measurement threshold is the second measurement threshold, the frequency corresponding to the third target measurement threshold is the target frequency. If the third target measurement threshold is the third measurement threshold, the frequency corresponding to the third target measurement threshold is the first frequency and the second frequency.

For a specific implementation of S1403, refer to related descriptions of S1302 in the foregoing embodiment. Details are not described herein again.

S1404 or S1405 is performed after S1403, and is specifically determined based on a quantity of pieces of neighboring cell information obtained by performing neighboring cell measurement on the frequency corresponding to the third target measurement threshold.

S1404: If the quantity of pieces of neighboring cell information in the third neighboring cell measurement result is greater than or equal to the first preset quantity, the mobile terminal determines, as the neighboring cell measurement result, the neighboring cell information obtained by performing neighboring cell measurement on the frequency corresponding to the third target measurement threshold.

Because positioning meeting a requirement can be completed based on only the first preset quantity (or slightly more) of pieces of neighboring cell information, if the quantity of pieces of neighboring cell information obtained by performing neighboring cell measurement on the frequency corresponding to the third target measurement threshold has reached the first preset quantity, the entire neighboring cell measurement procedure may be ended, that is, the neighboring cell information obtained by performing neighboring cell measurement on the frequency corresponding to the third target measurement threshold is determined as the neighboring cell measurement result.

S1206 is performed after S1404.

S1405: The mobile terminal increases a fourth target measurement threshold in the neighboring cell measurement configuration information if the quantity of pieces of neighboring cell information in the third neighboring cell measurement result is less than the first preset quantity, to cause an increased fourth target measurement threshold to be greater than the signal quality parameter of the target serving cell; or ignores the fourth target measurement threshold.

The fourth target measurement threshold is one of the second measurement threshold and the third measurement threshold that is less than the signal quality parameter of the target serving cell. Specifically, if the third target measurement threshold is the second measurement threshold, the fourth target measurement threshold is the third measurement threshold. If the third target measurement threshold is the third measurement threshold, the fourth target measurement threshold is the second measurement threshold.

S1406: The mobile terminal performs neighboring cell measurement on a frequency corresponding to the fourth target measurement threshold, to obtain a fourth neighboring cell measurement result, and adds the fourth neighboring cell measurement result to the third neighboring cell measurement result, to obtain the neighboring cell measurement result.

If the fourth target measurement threshold is the second measurement threshold, the frequency corresponding to the fourth target measurement threshold includes the target frequency. If the fourth target measurement threshold is the third measurement threshold, the frequency corresponding to the fourth target measurement threshold includes the first frequency and the second frequency. The fourth neighboring cell measurement result is added to the neighboring cell measurement result obtained based on the third neighboring cell measurement result, so that all neighboring cell information in the third neighboring cell measurement result and the fourth second neighboring cell measurement result is included.

For a specific implementation of S1406, refer to related descriptions of S1305 in the foregoing embodiment. Details are not described herein again.

S1206 is performed after S1406.

Certainly, when the signal quality parameter of the target serving cell is between the second measurement threshold and the third measurement threshold, the mobile terminal may alternatively directly perform forced measurement on the target frequency, the first frequency, and the second frequency, that is, perform the technical solution corresponding to S1204A and S1205 shown in FIG. 12. This is not specifically limited in this application.

Based on the technical solution corresponding to S1401 to S1406, when the mobile terminal is in the idle state and the signal instruction parameter of the target serving cell currently camped on is between the second measurement threshold and the third measurement threshold, when the mobile terminal can obtain sufficient neighboring cell information by performing neighboring cell measurement on only the frequency that corresponds to the third target measurement threshold and that may be for measurement according to the existing logic, the mobile terminal may perform neighboring cell measurement on only the frequency. This reduces time consumption and power consumption of entire neighboring cell measurement while ensuring subsequent positioning precision, thereby avoiding a problem that the mobile terminal cannot be normally used because a neighboring cell measurement user is excessively long. When the mobile terminal cannot obtain sufficient neighboring cell information by performing neighboring cell measurement on only the frequency corresponding to the third target measurement threshold, the mobile terminal may further perform forced neighboring cell measurement on the frequency that corresponds to the fourth target measurement threshold and that cannot be for neighboring cell measurement according to the existing logic, to ensure that the sufficient neighboring cell information is obtained, so that the mobile terminal can subsequently perform complete and sufficiently precise positioning, thereby improving the use experience of the user. In conclusion, based on the foregoing technical solution, when the mobile terminal is in the idle state and the signal instruction parameter of the target serving cell currently camped on is between the second measurement threshold and the third measurement threshold, the mobile terminal may obtain the sufficient neighboring cell information by using a proper measurement means, to meet the positioning requirement of the mobile terminal.

It should be noted that, in the neighboring cell measurement method provided in this embodiment of this application, after obtaining the neighboring cell measurement result, the electronic device (for example, the mobile terminal) may further perform cell handover according to displayed handover logic, or may not perform cell handover. This is not specifically limited in this application.

Actually, when the signal instruction of the serving cell on which the mobile terminal camps is good, a forced neighboring cell measurement action is not an action stipulated by the 3GPP protocol, and consumes a large amount of energy of the mobile terminal. Therefore, to reduce power consumption of the mobile terminal as much as possible and cause the mobile terminal to perform neighboring cell measurement according to normal logic in most cases,
after the mobile terminal performs forced neighboring cell measurement to obtain the neighboring cell measurement result, the mobile terminal stops, in second preset duration, an action related to forced measurement, that is, stops an action of ignoring the measurement threshold, or stops an action of increasing the neighboring cell measurement threshold.

In the embodiments corresponding to FIG. 6 to FIG. 8 and FIG. 10 to FIG. 14, when the signal quality parameter of the target serving cell is greater than the neighboring cell measurement threshold in the neighboring cell measurement configuration information from the network-side device, after S605, S1205, S1303, or S1305 is performed, the mobile terminal may stop an action related to forced measurement in the second preset duration, that is, stop an action of ignoring the neighboring cell measurement threshold, or stop an action of increasing the neighboring cell measurement threshold. Stopping the action of ignoring the neighboring cell measurement threshold means that in the second preset duration after S605, S1205, S1303, or S1305, when the signal quality parameter of the serving cell on which the mobile terminal camps is still greater than the neighboring cell measurement threshold in the neighboring cell measurement configuration information from the network-side device, forced neighboring cell measurement is not performed. Even if the positioning requirement exists, forced neighboring cell measurement is not performed. Stopping the action of increasing the neighboring cell measurement threshold means that when the signal quality parameter of the target serving cell is greater than the neighboring cell measurement threshold in the neighboring cell measurement configuration information from the network-side device, after S605, S1205, S1303, or S1305 is performed, an increased neighboring cell measurement threshold in the neighboring cell measurement configuration message from the network-side device is reduced to an original neighboring cell measurement threshold; and when the signal quality parameter of the serving cell on which the electronic device camps is still greater than the neighboring cell measurement threshold in the neighboring cell measurement configuration information from the network-side device in the second preset duration, neighboring cell measurement is not performed.

Based on this, in some embodiments, when the signal quality parameter of the target serving cell is greater than the neighboring cell measurement threshold in the neighboring cell measurement configuration information from the network-side device, after S605, S1205, S1303, or S1305 is performed, the neighboring cell measurement method further includes: The mobile terminal does not perform neighboring cell measurement if the signal quality parameter of the serving cell on which the mobile terminal camps is greater than the neighboring cell measurement threshold in the neighboring cell measurement configuration information from the network-side device in the second preset duration. The neighboring cell measurement configuration information from the network-side device is specifically determined based on a status of the mobile terminal. If the mobile terminal is in the connected state, the neighboring cell measurement configuration information from the network-side device is the neighboring cell measurement configuration information (that is, the first neighboring cell measurement configuration information) carried in the reconfiguration message. If the mobile terminal is in the idle state, the neighboring cell measurement configuration information from the network-side device is the neighboring cell measurement configuration information (that is, the second neighboring cell measurement configuration information) carried in the broadcast message.

Certainly, if the signal quality parameter of the serving cell on which the mobile terminal is camped is less than the neighboring cell measurement threshold in the neighboring cell measurement configuration information from the network-side device in the second preset duration, neighboring cell measurement may be performed on the target frequency to which the target serving cell belongs, and the first frequency and the second frequency in the neighboring cell measurement configuration information from the network-side device.

Start and end of the second preset duration may be determined by the mobile terminal by starting a second timer. Timing duration of the second timer is the second preset duration.

In addition, for the technical solution corresponding to S604A (or S1204A), when the signal quality parameter of the target serving cell is greater than the neighboring cell measurement threshold in the neighboring cell measurement configuration information from the network-side device, after S605 (or S1205) is performed, the first neighboring cell measurement procedure (or the second neighboring cell measurement procedure) further includes: The mobile terminal reduces an increased neighboring cell measurement threshold in the neighboring cell measurement configuration information from the network-side device to an original neighboring cell measurement threshold.

In this way, the mobile terminal may perform neighboring cell measurement according to normal measurement logic stipulated by 3GPP, to prevent the mobile terminal from performing forced neighboring cell measurement a plurality of times within a short time, thereby reducing power consumption of the mobile terminal, and improving the use experience of the user.

In the embodiment corresponding to FIG. 14, when the signal quality parameter of the target serving cell is between the second measurement threshold and the third measurement threshold in the second neighboring cell measurement configuration information from the network-side device, after S1406 is performed, the mobile terminal may stop, in the second preset duration, an action related to forced measurement on the frequency corresponding to the fourth target measurement threshold, that is, stop an action of ignoring the fourth target measurement threshold, or stop an action of increasing the fourth target measurement threshold. Stopping the action of ignoring the fourth target measurement threshold means that in the second preset duration after S1406, when the signal quality parameter of the target serving cell is still between the second measurement threshold and the third measurement threshold again, forced neighboring cell measurement is not performed on the frequency corresponding to the fourth target measurement threshold. Even if the positioning requirement exists, forced neighboring cell measurement is not performed on the frequency corresponding to the fourth target measurement threshold. Stopping the action of increasing the fourth target measurement threshold means that after S1406, the increased fourth target measurement threshold is reduced to the original fourth target measurement threshold; and when the signal quality parameter of the target serving cell is still between the second measurement threshold and the third measurement threshold again in the second preset duration, forced neighboring cell measurement is not performed on the frequency corresponding to the fourth target measurement threshold.

Based on this, in some embodiments, after S1406 is performed, the neighboring cell measurement method further includes: The mobile terminal does not perform neighboring cell measurement on the frequency corresponding to the fourth target measurement threshold when the signal quality parameter of the serving cell on which the mobile terminal in the idle state currently camps is between the second measurement threshold and the third measurement threshold in the second preset duration. In addition, for the technical solution corresponding to S1406, after S1406 is performed, the second neighboring cell measurement procedure further includes: The mobile terminal reduces the increased fourth target measurement threshold in the neighboring cell measurement configuration information from the network-side device to the original fourth target neighboring cell measurement threshold.

In this way, the mobile terminal may perform neighboring cell measurement according to normal measurement logic stipulated by 3GPP, to prevent the mobile terminal from performing forced neighboring cell measurement a plurality of times within a short time, thereby reducing power consumption of the mobile terminal, and improving the use experience of the user.

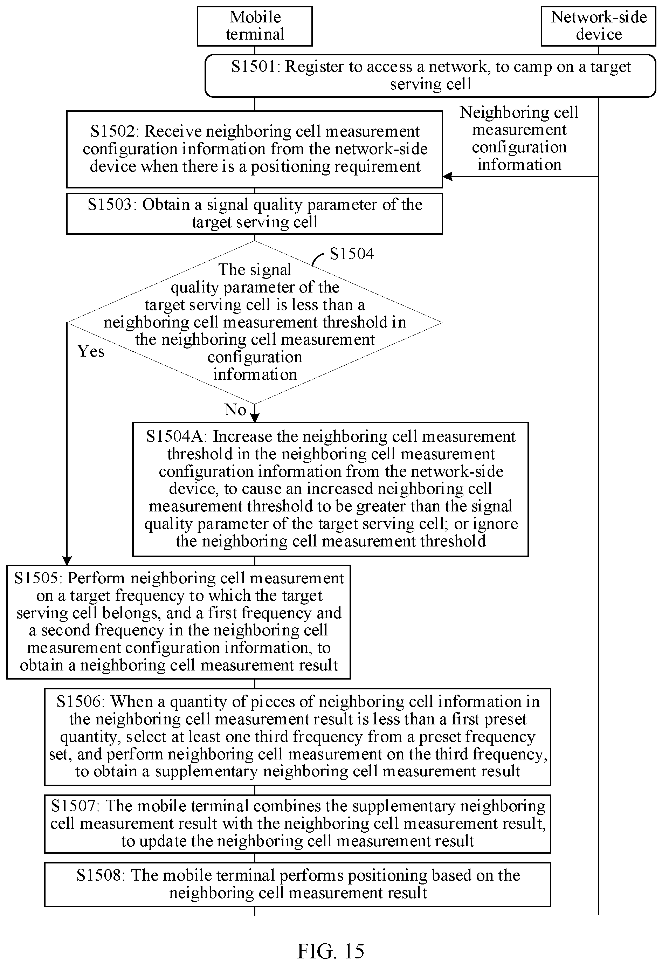

Actually, all frequencies in the neighboring cell measurement configuration information sent by the network-side device to the mobile terminal are frequencies belonging to a same operator. However, actually, neighboring cells around a serving cell may include cells of operators, and cells belonging to a same operator are not enough. Even if all neighboring cell information is obtained through measurement, precise positioning cannot be implemented. Therefore, after the mobile terminal performs neighboring cell measurement to obtain the neighboring cell measurement result, if the quantity of pieces of neighboring cell information in the neighboring cell measurement result is less than the first preset quantity, that is, if a neighboring cell quantity of pieces of neighboring cell information obtained by performing neighboring cell measurement by the mobile terminal is less than the first preset quantity, the mobile terminal needs to add neighboring cell measurement on a frequency of another operator, to obtain a sufficient amount of neighboring cell information. Based on this, an embodiment of this application further provides another neighboring cell measurement method. As shown in FIG. 15, the method may include S1501 to S1508.

S1501: A mobile terminal is powered on, and registers to access a network via a network-side device, to camp on a target serving cell.

For a specific implementation of S1501, refer to related descriptions of S601 in the foregoing embodiment. Details are not described herein again.

S1502: The mobile terminal receives neighboring cell measurement configuration information from the network-side device when the mobile terminal has a positioning requirement.

For a specific implementation of S1501, refer to related descriptions of S602 or S1202 in the foregoing embodiments. Details are not described herein again. A target frequency to which the target serving cell belongs, a first frequency in the neighboring cell measurement configuration information, and a second frequency in the neighboring cell measurement configuration information all belong to a first operator.

S1503: The mobile terminal obtains a signal quality parameter of the target serving cell.

For a specific implementation of S1503, refer to related descriptions of S603 or S1203 in the foregoing embodiments. Details are not described herein again.

S1504: The mobile terminal determines whether the signal quality parameter of the target serving cell is less than a neighboring cell measurement threshold in the neighboring cell measurement configuration information from the network-side device.

S1505 is performed when the signal quality parameter of the target serving cell is less than the neighboring cell measurement threshold in the neighboring cell measurement configuration information from the network-side device. S1505 or S1504A is performed when the signal quality parameter of the target serving cell is less than the neighboring cell measurement threshold in the neighboring cell measurement configuration information from the network-side device.

For a specific implementation of S1504, refer to related descriptions of S604 or S1204 in the foregoing embodiments. Details are not described herein again.

In addition, for an implementation in which the mobile terminal performs neighboring cell measurement after S1503, refer to related descriptions in the instances shown in FIG. 13 and FIG. 14 in the foregoing embodiments. Details are not described herein again.

Certainly, actually, whether to perform neighboring cell measurement after S1504 is performed may also be determined according to existing neighboring cell measurement logic. Specifically, S1505 is performed when the signal quality parameter of the target serving cell is less than the neighboring cell measurement threshold in the neighboring cell measurement configuration information from the network-side device. When the signal quality parameter of the target serving cell is less than the neighboring cell measurement threshold in the neighboring cell measurement configuration information from the network-side device, the neighboring cell measurement is not performed, that is, the entire neighboring cell measurement procedure is ended. In this case, S1504A may not exist.

S1504A: The mobile terminal increases the neighboring cell measurement threshold in the neighboring cell measurement configuration information from the network-side device, to cause an increased neighboring cell measurement threshold to be greater than the signal quality parameter of the target serving cell; or ignores the neighboring cell measurement threshold.

For a specific implementation of S1504A, refer to related descriptions of S604A or S1204A in the foregoing embodiments. Details are not described herein again.

S1505: The mobile terminal performs neighboring cell measurement on the target frequency to which the target serving cell belongs, and the first frequency and the second frequency in the neighboring cell measurement configuration information from the network-side device, to obtain a neighboring cell measurement result.

For a specific implementation of S1505, refer to related descriptions of S605 or S1205 in the foregoing embodiments. Details are not described herein again.

S1506: When a quantity of pieces of neighboring cell information in the neighboring cell measurement result is less than a first preset quantity, select at least one third frequency from a preset frequency set, and perform neighboring cell measurement on the third frequency, to obtain a supplementary neighboring cell measurement result.

The supplementary neighboring cell measurement result may include neighboring cell information of at least one neighboring cell.

The preset frequency set may be, in an entire network obtained by a mobile terminal manufacturer by using a big data technology, a plurality of frequencies whose corresponding serving cell quantities are in a first preset order and that are in all frequencies of each operator. For example, an example in which the preset order is the first three is used. If an operator A has ten frequencies, and in the ten frequencies, quantities of serving cells corresponding to a frequency a, a frequency b, and a frequency c rank the first three in a sorting result of quantities of serving cells corresponding to all the ten frequencies, the preset frequency set may include the frequency a, the frequency b, and the frequency c. An operator to which the third frequency belongs is not the first operator.

In some embodiments, based on the same reason for performing S6051 and S6052 in the foregoing embodiment, to avoid excessively long neighboring cell measurement duration due to an excessively large quantity of frequencies that need to be measured, thereby avoiding relatively large power consumption and avoiding affecting use of a normal service of the mobile terminal, a quantity of the at least one third frequency may be less than a target quantity. The target quantity is a sum of a quantity of target frequencies, a quantity of first frequencies, and a quantity of second frequencies. In addition, total duration for which S1506 is performed should be shorter than third preset duration. Based on this, S1506 may specifically include S1 and S2.

S1: When the quantity of pieces of neighboring cell information in the neighboring cell measurement result is less than the first preset quantity, the mobile terminal selects the at least one third frequency from the preset frequency set, and performs neighboring cell measurement on the at least one third frequency in the third preset duration.

The third preset duration may be any feasible duration value. This is not specifically limited in this application.

In some embodiments, because neighboring cell measurement has been performed for particular duration in S1505, to further reduce entire neighboring cell measurement duration, the third preset duration should be shorter than the first preset duration in the foregoing embodiments. In some embodiments, the third preset duration may be a difference obtained by subtracting the first preset duration from duration consumed for performing S1505 to obtain the neighboring cell measurement result.

For example, in a possible implementation, S1 may be specifically that the mobile terminal may start a third timer. Timing duration of the third timer is the third preset duration. In a timing process of the third timer, the mobile terminal may perform neighboring cell measurement on the at least one third frequency.

S2: The mobile terminal stops a neighboring cell measurement action when the third preset duration ends, and determines, as the supplementary neighboring cell measurement result, neighboring cell information of a neighboring cell currently obtained by performing neighboring cell measurement on the at least one third frequency.

For example, in a possible implementation, S2 may be specifically that the mobile terminal stops the neighboring cell measurement action when timing of the third timer ends, and determines, as the supplementary neighboring cell measurement result, the neighboring cell information of the neighboring cell currently obtained by performing neighboring cell measurement on the at least one third frequency.

Based on the technical solution corresponding to S1 and S2, the mobile terminal may limit duration that needs to be consumed for neighboring cell measurement in a process of obtaining the supplementary neighboring cell measurement result, thereby avoiding a problem that a service of the mobile terminal cannot be normally used because the neighboring cell measurement duration is excessively long.

In addition, it should be noted that if a third frequency in the at least one third frequency is the same as the target frequency, a first frequency, or a second frequency, when S1506 is performed, neighboring cell measurement is not performed on the third frequency, to avoid repeated measurement on a same frequency, thereby avoiding obtaining repeated neighboring cell information.

Further, in this embodiment of this application, subsequent precise positioning can be completed provided that a sum of a quantity of pieces of neighboring cell information in the supplementary neighboring cell measurement result and the quantity of pieces of neighboring cell information in the neighboring cell measurement result obtained in S1205 reaches the first preset quantity. Obtaining more neighboring cell information only causes an increase in power consumption, and has little effect on improving positioning precision. Based on this, after S1, the method may further include: The mobile terminal stops the neighboring cell measurement action on the third frequency if a second preset quantity of pieces of neighboring cell information of neighboring cells is obtained before the third preset duration ends, and determines the second preset quantity of pieces of neighboring cell information of neighboring cells as the supplementary neighboring cell measurement result. The second preset quantity is a difference obtained by subtracting the first preset quantity from the quantity of pieces of neighboring cell information in the neighboring cell measurement result.

S1507: The mobile terminal combines the supplementary neighboring cell measurement result with the neighboring cell measurement result, to update the neighboring cell measurement result.

S1508: The mobile terminal performs positioning based on the neighboring cell measurement result.

For a specific implementation of S1508, refer to related descriptions of S606 in the foregoing embodiment. Details are not described herein again.

Based on the technical solution corresponding to S1501 to S1508, when the quantity of pieces of neighboring cell information in the neighboring cell measurement result is insufficient for precise positioning, the mobile terminal may perform measurement on frequencies of other operators, to obtain sufficient neighboring cell information, thereby completing precise positioning, and improving use experience of a user.

It may be understood that, to implement the foregoing functions, the electronic device includes a corresponding hardware structure and/or software module for performing each function. A person skilled in the art should be easily aware that, in embodiments of the present invention, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, the electronic device may be divided into functional modules based on the foregoing method examples. For example, functional modules corresponding to the functions may be obtained through division, or two or more functions may be integrated into one processing module. The integrated module may be implemented in a form of hardware, or may be implemented in a form of a software functional module. It should be noted that, in embodiments of the present invention, the division of the modules is merely an example, and is merely division of logical functions. During actual implementation, there may be another division manner.

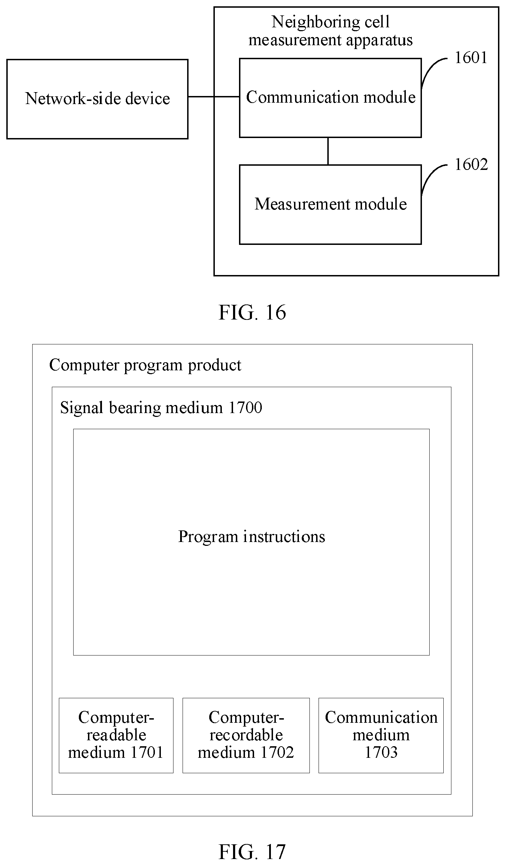

When the functional modules corresponding to the functions are obtained through division, as shown in FIG. 16, an embodiment of this application provides a neighboring cell measurement apparatus. The apparatus may be used in an electronic device. The apparatus includes a communication module 1601 and a measurement module 1602.

The communication module 1601 is configured to receive neighboring cell measurement configuration information from a network-side device, where the neighboring cell measurement configuration information includes a neighboring cell measurement threshold. The measurement module 1602 is configured to perform neighboring cell measurement when a signal quality parameter of a target serving cell is greater than the neighboring cell measurement threshold in the neighboring cell measurement configuration information received by the communication module 1601, to obtain a neighboring cell measurement result.

In addition, cooperation of the communication module 1601 and the measurement module 1602 may further cause the neighboring cell measurement apparatus to complete all steps in the neighboring cell measurement method provided in the foregoing embodiments.

For the electronic device in the foregoing embodiments, specific manners of executing operations by each module are described in detail in embodiments of the neighboring cell measurement method in the foregoing embodiments, and details are not described herein again. For related beneficial effects, refer to beneficial effects of the foregoing neighboring cell measurement method. Details are not described herein again.

An embodiment of this application provides an electronic device. The electronic device includes: a display screen, a memory, and one or more processors, where the display screen and the memory are coupled to the processor; and the memory stores computer program code, the computer program code includes computer instructions, and when the computer instructions are executed by the processor, the electronic device is caused to perform the neighboring cell measurement method according to the foregoing embodiments. For a specific structure of the electronic device, refer to the structure of the electronic device shown in FIG. 4.

An embodiment of this application further provides a computer-readable storage medium. The computer-readable storage medium includes computer instructions. When the computer instructions are run on an electronic device, the electronic device is caused to perform the neighboring cell measurement method according to the foregoing embodiments.

An embodiment of this application further provides a computer program product. The computer program product includes executable instructions. When the computer program product is run on an electronic device, the electronic device is caused to perform the neighboring cell measurement method according to the foregoing embodiments.

FIG. 17 is a conceptual partial diagram of a computer program product according to an embodiment of the present invention. In an embodiment, the computer program product is provided by using a signal bearing medium 1700. The signal bearing medium 1700 may include one or more program instructions, and when the one or more program instructions are executed by one or more processors, functions or some of the functions described in FIG. 4 may be provided. Therefore, for example, one or more features or steps in the neighboring cell measurement method provided with reference to the foregoing embodiments may be undertaken by the one or more instructions associated with the signal bearing medium 1700. In addition, an example instruction of the program instruction in FIG. 17 is also described.

In some examples, the signal bearing medium 1700 may include a computer-readable medium 1701, for example, but not limited to, a hard disk drive, a compact disc (CD), a digital video disc (DVD), a digital tape, a memory, a read-only memory (read-only memory, ROM), or a random access memory (random access memory, RAM).

In some implementations, the signal bearing medium 1700 may include a computer-recordable medium 1702, for example, but not limited to, a memory, a read/write (R/W) CD, or a R/W DVD.

In some implementations, the signal bearing medium 1700 may include a communication medium 1703, for example, but not limited to, a digital and/or analog communication medium (for example, an optical cable, a wave guide, a wired communication link, or a wireless communication link).

The signal bearing medium 1700 may be transmitted by the communication medium 1703 in a wireless form (for example, a wireless communication medium conforming to the IEEE 802.150 standard or another transmission protocol). The one or more program instructions may be, for example, computer-executable instructions or logic implementation instructions.

In some examples, a data writing apparatus configured to receive and store external data may be further included, and may be configured to provide various operations, functions, or actions in response to one or more program instructions in the computer-readable medium 1701, the computer-recordable medium 1702, and/or the communication medium 1703.

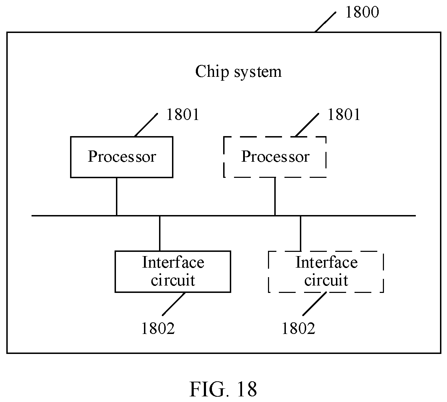

An embodiment of this application further provides a chip system. As shown in FIG. 18, a chip system 1800 includes at least one processor 1801, a memory, and at least one interface circuit 1802. The processor 1801 and the interface circuit 1802 may be interconnected by lines. For example, the interface circuit 1802 may be configured to receive a signal from another apparatus (for example, a network-side device). For another example, the interface circuit 1802 may be configured to send a signal to another apparatus (for example, a network-side device).

For example, the interface circuit 1802 may read instructions or computer programs stored in the memory, and send the instructions or the computer programs to the processor 1801. When the instructions or the computer programs are executed by the processor 1801, steps of the photographing method according to the foregoing embodiments may be implemented. Certainly, the chip system may further include other discrete devices. This is not specifically limited in this embodiment of this application.

Based on descriptions about the foregoing implementations, a person skilled in the art may clearly understand that, for a purpose of convenient and brief description, division into the foregoing functional modules is used as an example for illustration. In actual application, the foregoing functions may be allocated to different functional modules and implemented according to a requirement. In other words, an inner structure of an apparatus is divided into different functional modules to implement all or some of the functions described above.

In the several embodiments provided in this application, it should be understood that the disclosed apparatus/device and method may be implemented in other manners. For example, the described apparatus/device embodiment is merely an example. For example, module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical or other forms.

The units described as separate parts may or may not be physically separate, and parts displayed as units may be one or more physical units, that is, may be located in one place, or may be distributed in multiple different places. Some or all of the units may be selected based on actual requirements to achieve the objectives of the solutions of the embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technologies, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk drive, a read-only memory (read-only memory, ROM), a random access memory (random access memory, RAM), a magnetic disk, or an optical disc.

The foregoing content is only specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A neighboring cell measurement method, applied to an electronic device, wherein the method comprises:
receiving, by the electronic device, neighboring cell measurement configuration information from a network-side device, wherein the neighboring cell measurement configuration information comprises a neighboring cell measurement threshold; and
performing, by the electronic device, neighboring cell measurement when a signal quality parameter of a target serving cell on which the electronic device currently camps is greater than the neighboring cell measurement threshold in the neighboring cell measurement configuration information, to obtain a neighboring cell measurement result.

2. The method according to claim 1, wherein the performing, by the electronic device, neighboring cell measurement when a signal quality parameter of a target serving cell is greater than the neighboring cell measurement threshold in the neighboring cell measurement configuration information, to obtain a neighboring cell measurement result comprises:
increasing, by the electronic device, the neighboring cell measurement threshold in the neighboring cell measurement configuration information when the signal quality parameter of the target serving cell is greater than the neighboring cell measurement threshold in the neighboring cell measurement configuration information, to cause an increased neighboring cell measurement threshold to be greater than the signal quality parameter of the target serving cell; or ignoring the neighboring cell measurement threshold in the neighboring cell measurement configuration information; and
performing, by the electronic device, neighboring cell measurement, to obtain the neighboring cell measurement result.

3. The method according to claim 2, wherein the receiving, by the electronic device, neighboring cell measurement configuration information from a network-side device comprises:
receiving, by the electronic device, a reconfiguration message from the network-side device when the electronic device is in a connected state, wherein the reconfiguration information carries the neighboring cell measurement configuration information; or
receiving, by the electronic device, a broadcast message from the network-side device when the electronic device is in an idle state, wherein the broadcast message carries the neighboring cell measurement configuration information.

4. The method according to claim 3, wherein the neighboring cell measurement configuration information further comprises at least one first frequency and at least one second frequency; the first frequency is different from a target frequency of the target serving cell on which the electronic device currently camps, and a communication standard to which the first frequency belongs is the same as a communication standard to which the target frequency band belongs; the second frequency is different from the target frequency of the target serving cell on which the electronic device currently camps, and a communication standard to which the second frequency belongs is different from the communication standard to which the target frequency band belongs; and
the performing, by the electronic device, neighboring cell measurement, to obtain a neighboring cell measurement result comprises: performing, by the electronic device, neighboring cell measurement on the target frequency, the first frequency, and the second frequency, to obtain the neighboring cell measurement result.

5. The method according to claim 4, wherein when the electronic device is in the connected state,
the neighboring cell measurement threshold in the neighboring cell measurement configuration information comprises a first measurement threshold; and
the increasing, by the electronic device, the neighboring cell measurement threshold when the signal quality parameter of the target serving cell is greater than the neighboring cell measurement threshold, to cause an increased neighboring cell measurement threshold to be greater than the signal quality parameter of the target serving cell comprises: increasing, by the electronic device, the first measurement threshold when the signal quality parameter of the target serving cell is greater than the first measurement threshold, to cause an increased first measurement threshold to be greater than the signal quality parameter of the target serving cell.

6. The method according to claim 4, wherein when the electronic device is in the idle state,
the neighboring cell measurement threshold in the neighboring cell measurement configuration information comprises a second measurement threshold and a third measurement threshold; the second measurement threshold is a measurement threshold for performing neighboring cell measurement on the target frequency, and the third measurement threshold is a measurement threshold for performing neighboring cell measurement on the first frequency and the second frequency; and
the increasing, by the electronic device, the neighboring cell measurement threshold when the signal quality parameter of the target serving cell is greater than the neighboring cell measurement threshold, to cause an increased neighboring cell measurement threshold to be greater than the signal quality parameter of the target serving cell comprises: increasing, by the electronic device, both the second measurement threshold and the third measurement threshold when both the second measurement threshold and the third measurement threshold are less than the signal quality of the target serving cell, to cause both an increased second measurement threshold and an increased third measurement threshold to be greater than the signal quality parameter of the target serving cell.

7. The method according to claim 6, wherein the method further comprises:
increasing, by the electronic device, a first target measurement threshold when the signal quality parameter of the target serving cell is greater than the neighboring cell measurement threshold, to cause an increased first target measurement threshold to be greater than the signal quality parameter of the target serving cell, wherein the first target measurement threshold is either the second measurement threshold or the third measurement threshold;
performing, by the electronic device, neighboring cell measurement on a frequency corresponding to the first target measurement threshold, to obtain a first neighboring cell measurement result, wherein if the first target measurement threshold is the second measurement threshold, the frequency corresponding to the first target measurement threshold comprises the target frequency; and if the first target measurement threshold is the third measurement threshold, the frequency corresponding to the first target measurement threshold comprises the first frequency and the second frequency; and
determining, by the electronic device, the first neighboring cell measurement result as the neighboring cell measurement result if a quantity of pieces of neighboring cell information in the first neighboring cell measurement result is greater than or equal to a first preset quantity.

8. The method according to claim 7, wherein after the performing, by the electronic device, neighboring cell measurement on a frequency corresponding to the first target measurement threshold, the method further comprises:
increasing, by the electronic device, a second target measurement threshold if the quantity of pieces of neighboring cell information in the first neighboring cell measurement result is less than the first preset quantity, to cause an increased second target measurement threshold to be greater than the signal quality parameter of the target serving cell, wherein the second target measurement threshold is the other one of the second measurement threshold and the third measurement threshold that is other than the first target measurement threshold; and
performing, by the electronic device, neighboring cell measurement on a frequency corresponding to the second target measurement threshold, to obtain a second neighboring cell measurement result, and adding the second neighboring cell measurement result to the first neighboring cell measurement result, to obtain the neighboring cell measurement result, wherein if the second target measurement threshold is the third measurement threshold, the frequency corresponding to the second target measurement threshold comprises the first frequency and the second frequency; and if the second target measurement threshold is the second measurement threshold, the frequency corresponding to the second target measurement threshold comprises the target frequency.

9. The method according to claim 7 or 8, wherein the first target measurement threshold is the second measurement threshold.

10. The method according to claim 6, wherein after the receiving, by the electronic device, neighboring cell measurement configuration information from a network-side device, the method further comprises:
performing, by the electronic device, neighboring cell measurement on a frequency corresponding to the third target measurement threshold when the signal quality parameter of the target serving cell is between the second measurement threshold and the third measurement threshold, to obtain a third neighboring cell measurement result, wherein the third target measurement threshold is one of the second measurement threshold and the third measurement threshold that is greater than the signal quality parameter of the target serving cell; if the third target measurement threshold is the second measurement threshold, the frequency corresponding to the third target measurement threshold comprises the target frequency; and if the third target measurement threshold is the third measurement threshold, the frequency corresponding to the third target measurement threshold comprises the first frequency and the second frequency; and
determining, by the electronic device, the third neighboring cell measurement result as the neighboring cell measurement result if a quantity of pieces of neighboring cell information in the third neighboring cell measurement result is greater than or equal to a first preset quantity.

11. The method according to claim 10, wherein after the performing, by the electronic device, neighboring cell measurement on a frequency corresponding to the third target measurement threshold, the method further comprises:
increasing, by the electronic device, a fourth target measurement threshold if the quantity of pieces of neighboring cell information in the third neighboring cell measurement result is less than the first preset quantity, to cause an increased fourth target measurement threshold to be greater than the signal quality parameter of the target serving cell, wherein the fourth target measurement threshold is the other one of the second measurement threshold and the third measurement threshold that is other than the third target measurement threshold; and
performing, by the electronic device, neighboring cell measurement on a frequency corresponding to the fourth target measurement threshold, to obtain a fourth neighboring cell measurement result, and adding the fourth neighboring cell measurement result to the third neighboring cell measurement result, to obtain the neighboring cell measurement result, wherein if the fourth target measurement threshold is the third measurement threshold, the frequency corresponding to the fourth target measurement threshold comprises the first frequency and the second frequency; and if the fourth target measurement threshold is the third measurement threshold, the frequency corresponding to the fourth target measurement threshold comprises the target frequency.

12. The method according to claim 5 or 6, wherein the performing, by the electronic device, neighboring cell measurement, to obtain a neighboring cell measurement result comprises:
performing, by the electronic device, neighboring cell measurement on the target frequency, the first frequency, and the second frequency in first preset duration; and
stopping, by the electronic device, a neighboring cell measurement action when the first preset duration ends, and determining, as the neighboring cell measurement result, neighboring cell information of a neighboring cell obtained by performing neighboring cell measurement on the target frequency, the first frequency, and the second frequency.

13. The method according to claim 12, wherein the receiving, by the electronic device, neighboring cell measurement configuration information from a network-side device comprises: receiving, by the electronic device, the neighboring cell measurement configuration information from the network-side device when the electronic device has a positioning requirement; and
after the performing, by the electronic device, neighboring cell measurement on the target frequency, the first frequency, and the second frequency in first preset duration, the method further comprises:
stopping, by the electronic device, the neighboring cell measurement action if a first preset quantity of pieces of neighboring cell information of neighboring cells is obtained before the first preset duration ends, and determining the first preset quantity of pieces of neighboring cell information of neighboring cells as the neighboring cell measurement result.

14. The method according to claim 13, wherein the target frequency, the first frequency, and the second frequency belong to a first operator; and after the performing, by the electronic device, neighboring cell measurement on the target frequency, the first frequency, and the second frequency, to obtain the neighboring cell measurement result, the method further comprises:
when a quantity of pieces of neighboring cell information in the neighboring cell measurement result is less than the first preset quantity, selecting, by the electronic device, at least one third frequency from a preset frequency set, and performing neighboring cell measurement on the third frequency, to obtain a supplementary neighboring cell measurement result, and update the neighboring cell measurement result, wherein the preset frequency set comprises a plurality of frequencies, and the plurality of frequencies comprise frequencies of different operators; and the third frequency does not belong to the first operator.

15. The method according to claim 14, wherein a quantity of third frequencies in the at least one third frequency is less than a target quantity, and the target quantity is a sum of a quantity of target frequencies, a quantity of first frequencies, and a quantity of second frequencies.

16. The method according to claim 15, wherein the selecting, by the electronic device, at least one third frequency from a preset frequency set, and performing neighboring cell measurement on the third frequency, to obtain a supplementary neighboring cell measurement result comprises:
selecting, by the electronic device, the at least one third frequency from the preset frequency set, and performing neighboring cell measurement on the third frequency in third preset duration; and
stopping, by the electronic device, a neighboring cell measurement action when the third preset duration ends, and determining, as the supplementary neighboring cell measurement result, neighboring cell information of a neighboring cell obtained by performing neighboring cell measurement on the third frequency.

17. The method according to claim 16, wherein after the selecting, by the electronic device, the at least one third frequency from the preset frequency set, and performing neighboring cell measurement on the third frequency in third preset duration, the method further comprises:
stopping, by the electronic device, the neighboring cell measurement action on the third frequency if a second preset quantity of pieces of neighboring cell information of neighboring cells is obtained before the third preset duration ends, and determining the second preset quantity of pieces of neighboring cell information of neighboring cells as the supplementary neighboring cell measurement result, wherein the second preset quantity is a difference obtained by subtracting the first preset quantity from the quantity of pieces of neighboring cell information in the neighboring cell measurement result.

18. The method according to claim 5 or 6, wherein after the performing, by the electronic device, neighboring cell measurement on the target frequency, the first frequency, and the second frequency, to obtain the neighboring cell measurement result, the method further comprises:
reducing, by the electronic device, an increased neighboring cell measurement threshold in the neighboring cell measurement configuration information from the network-side device to an original neighboring cell measurement threshold.

19. The method according to claim 5 or 6, wherein after the performing, by the electronic device, neighboring cell measurement on the target frequency, the first frequency, and the second frequency, to obtain the neighboring cell measurement result, the method further comprises:
skipping performing, by the electronic device in second preset duration, neighboring cell measurement if a signal quality parameter of a serving cell on which the electronic device camps is greater than the neighboring cell measurement threshold in the neighboring cell measurement configuration information from the network-side device.

20. The method according to claim 6, wherein when the electronic device is in the idle state, the neighboring cell measurement configuration information further comprises a priority of the target frequency, a priority of each first frequency, and a priority of each second frequency; and the performing, by the electronic device, neighboring cell measurement on the target frequency, the first frequency, and the second frequency, to obtain the neighboring cell measurement result comprises:
sequentially performing, by the electronic device, neighboring cell measurement on the target frequency, the first frequency, and the second frequency in descending order of the priorities, to obtain the neighboring cell measurement result.

21. The method according to claim 20, wherein the broadcast message comprises at least one system information block SIB, and the at least one SIB carries the neighboring cell measurement configuration information.

22. The method according to claim 21, wherein
when the target serving cell is a long term evolution LTE cell, the at least one SIB comprises a SIB 3, a SIB 5, and a SIB 24, wherein the SIB 3 comprises the second measurement threshold and the third measurement threshold, the SIB 5 comprises the priority of the target frequency, the at least one first frequency, and the priority of the first frequency, and the SIB 24 comprises the at least one second frequency and the priority of the second frequency; or
when the target serving cell is a new radio NR cell, the at least one SIB comprises a SIB 2, a SIB 4, and a SIB 5, wherein the SIB 2 comprises the second measurement threshold and the third measurement threshold, the SIB 4 comprises the priority of the target frequency, the at least one first frequency, and the priority of the first frequency, and the SIB 5 comprises the at least one second frequency and the priority of the second frequency.

23. The method according to claim 5 or 6, wherein the neighboring cell measurement result comprises neighboring cell information of a plurality of neighboring cells; the neighboring cell information of the plurality of neighboring cells comprises neighboring cell information of a plurality of neighboring cells corresponding to at least one frequency; and the neighboring cell information comprises a cell identifier ID and a signal quality parameter.

24. The method according to claim 5 or 6, wherein the signal instruction parameter comprises a reference signal received power RSRP or reference signal received quality RSRQ.

25. The method according to claim 5 or 6, wherein the receiving, by the electronic device, neighboring cell measurement configuration information from a network-side device comprises: receiving, by the electronic device, the neighboring cell measurement configuration information from the network-side device when the electronic device has a positioning requirement; and
after the performing, by the electronic device, neighboring cell measurement on the target frequency, the first frequency, and the second frequency, to obtain the neighboring cell measurement result, the method further comprises: performing, by the electronic device, positioning based on the neighboring cell measurement result.

26. An electronic device, comprising: a display screen, a memory, and one or more processors, wherein the display screen and the memory are coupled to the processor; and the memory stores computer program code, the computer program code comprises computer instructions, and when the computer instructions are executed by the processor, the electronic device is caused to perform the neighboring cell measurement method according to any one of claims 1 to 25.

27. A computer-readable storage medium, comprising computer instructions, wherein when the computer instructions are run on an electronic device, the electronic device is caused to perform the neighboring cell measurement method according to any one of claims 1 to 25.
